(19) Europäisches Patentamt
European Patent Office
Office européen des brevets

(11) **EP 4 538 940 A1**

(12) **EUROPEAN PATENT APPLICATION**

(43) Date of publication:
**16.04.2025 Bulletin 2025/16**

(21) Application number: **24206284.2**

(22) Date of filing: **11.10.2024**

(51) International Patent Classification (IPC):
**G06N 20/10** (2019.01)  **G06N 20/20** (2019.01)
**G06N 5/01** (2023.01)  **G06N 7/01** (2023.01)
**G06N 3/08** (2023.01)

(52) Cooperative Patent Classification (CPC):
**G06N 20/10; G06N 3/08; G06N 5/01; G06N 7/01; G06N 20/20**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **12.10.2023 US 202318379324**

(71) Applicant: **Credo.AI Corp.**
**Los Altos, CA 94022 (US)**

(72) Inventors:
• **SHERMAN, Eli**
  **Baltimore, 21211 (US)**
• **EISENBERG, Ian W.**
  **San Francisco, 94110 (US)**
• **CHEN, Eli**
  **San Mateo, 94402 (US)**

(74) Representative: **Haley Guiliano International LLP**
**26-28 Bedford Row**
**London WC1R 4HE (GB)**

(54) **SYSTEMS AND METHODS FOR VERIFYING THE UNIQUE IDENTITY OF ARTIFICIAL INTELLIGENCE MODELS**

(57)    Systems and methods are described herein for verifying the unique identity of an artificial intelligence model. The systems and methods described herein determine whether the behavior of a first artificial intelligence model is like the behavior of a second artificial intelligence model. When the behavior of the two models is substantially similar, the two models are considered to have a same identity. When the behavior of the two models differs, the two models are considered to be different.

**FIG. 1**

**Description**

Background

The present disclosure is directed to systems and methods for verifying the unique identity of artificial intelligence models. In particular, systems and methods are provided herein that verify the unique identity of an artificial intelligence model based on the behavior of the artificial intelligence model.

Summary

Artificial intelligence ("AI") systems have become increasingly prevalent components of electronic devices and software. Oftentimes, AI systems include one or more AI models that evaluate input data to provide one or more predictions, decisions, or outputs. As reliance on the output from the AI models has increased, so has stakeholder concern for assessing the output of such systems to ensure that the model is meeting a stakeholder's individual goals or requirements. The results of the assessments may include an evaluation of the model's predictive performance, security features, fairness characteristics, etc. These assessments may be delivered to stakeholders so they can evaluate whether the behavior of the AI model meets their goals, which may vary between stakeholders.

For example, a credit card company may implement an AI system to process credit card applications. The AI model may evaluate data from a credit card application to predict an applicant's risk of default. The credit card company may be most interested in limiting the number of accepted applicants who default in the future. Accordingly, the credit card company may be concerned with ensuring the highest predictive ability for the AI model. Another stakeholder, such as a regulatory agency, may be most interested in ensuring that the applications are evaluated without bias. Accordingly, the regulatory agency may be most interested in ensuring that the fairness of the model is greatest. A stakeholder (such as the regulatory agency) may request an assessment of the AI model from a developer (e.g., the credit card company) to evaluate compliance with the stakeholder's requirements or goals (e.g., compliance with fairness regulations).

Typically, the environment used to perform an assessment of an AI model (e.g., a sandboxed development or evaluation environment) differs from that of a production environment (e.g., an environment where live customer and/or client data is used). When a developer's incentives are misaligned with those of another stakeholder, the developer may use one AI model to perform an assessment and may use a different AI model in production, where the behavior of the model is less transparent. For example, the credit card company may use a first AI model to generate assessments for the regulatory agency to show that the AI model does not contain bias. The first model may have low predictive performance (e.g., low performance in evaluating whether a user will default in the future) but may be highly fair and may contain no bias (e.g., may pseudo-randomly accept credit card applications). Because the behavior of the AI model in the production environment is less transparent (e.g., because the AI model may be just one of multiple components in a credit application processing system), the credit card company may be more inclined to change the behavior of the model between assessment/evaluation and production to better align with the goals of the credit card company. For example, the credit card company may use a second AI model in the production environment that has high predictive performance that is independent of any other non-performance characteristics.

Because of the difficulty, to a non-developer stakeholder, in determining whether a different AI model is used between a testing/assessment environment and a production environment, developers are not disincentivized from materially modifying a model to best align with the developer's own interests while simulating compliance with regulator or other stakeholder interests. Absent any reliable way to establish an identity of an AI model, an external stakeholder would not be able to detect a model swap from a model used in an assessment to a different model used in a production environment. Furthermore, developers typically do not want to expose their models nor data to outside parties, such as external stakeholders, so verification of the model by direct inspection is difficult if not impossible.

Additionally, developers may make changes to models over time that do not materially impact the concerns of an external stakeholder. For example, a developer may increase aspects of the performance of a model while not impacting the predictive performance or the bias specifically. During the changes, a developer may change the name or version identifier of an AI model. However, these non-material changes are of little to no interest to external stakeholders and therefore should be disregarded. Therefore, systems that detect changes in a model based on a model hash, a title, or a version number may create false positives.

Accordingly, the systems and methods provided herein verify the unique identity of artificial intelligence models. In particular, the systems and methods provided herein allow for an external stakeholder to verify an identity of an AI model based on the behavioral fingerprint of the model, without needing to expose the AI model itself to the external stakeholder. In some embodiments, the systems and methods described herein comprise a verification enablement system ("VES") that verifies the unique identity of an AI model. The VES may be implemented across one or more computers, servers and/or combinations of hardware and software. The VES may be used to verify the sameness and or identify the distinctness of two models provided at separate times.

In some instances, a developer may attempt to thwart the efforts of the VES in determining the identity of an AI model. For example, a developer may capture and store the input samples used during an assessment and may also capture and store the corresponding output. When the production AI system receives an input sample (e.g., from the VES), the AI system may compare the input sample to a database of the captured samples used during the assessment. When the AI system determines that an input sample system matches one of the samples captured during the assessment, the AI system may provide an output that is the same as the output provided during the assessment. In such a tampered system, an external stakeholder (such as one that can only see the output of the system) will mistakenly believe that the tampered system performs in the same way as the system used to perform the assessment. Accordingly, it is preferable that the VES additionally can eliminate tampering of this nature by the developer.

In some embodiments, the VES receives the samples of an evaluation dataset from an entity, such as a developer. For example, the VES may receive samples of an evaluation dataset from a credit card company that includes multiple samples (e.g., credit card applications) used by the credit card company to evaluate the performance of the AI model. The VES may determine a dimension and range of feature values in the evaluation dataset. For example, the VES may determine a number of features in the sample credit card applications (e.g., an age feature, income level feature, credit score feature, credit utilization feature, etc.) and a range of feature values for the samples (e.g., a range of 18-100 for the age feature). In some embodiments, based on the dimension and range of feature values for samples in the evaluation dataset, the VES may formulate a data generation function that enables the creation of data samples with characteristics like the evaluation dataset. For example, the VES may generate a data generation function that generates sample credit card applications.

The VES may generate a first plurality of samples where a first dimension and a first range of feature values for the first plurality of samples match the determined dimension and range of feature values. For example, the sample credit card application may have fields, in the application, and a range of values that correspond to the dimension and range of feature values in the evaluation dataset. For example, the data generation function may generate sample credit card applications that, for example, include an age feature that spans the age ranges 18-100 (the same range as the evaluation dataset).

The VES may input the first plurality of samples into a first AI model to generate a first set of output data. For example, the VES may apply each sample of the plurality of samples to the first AI model and may receive a respective prediction based on the sample. For example, for any given sample credit card application (e.g., samples generated by the data generation function), the VES may receive a prediction from the credit card application model predicting a risk of default for the given sample. In some embodiments, the VES may determine a first mean and a first variance for the plurality of predictions generated by the first model. For example, the VES may compute a mean predicted level of default and variance for the predicted level of default output by the AI model. The mean and variance may be based on one or more factors and/or outputs by the model. For example, the VES may additionally compute a separate mean and variance across different sample features, such as different age ranges. For example, the VES may compute a first mean and variance for samples within the age range 18-25 and a second mean and variance for samples with an age range of 26-40. These quantities, collectively, establish a behavioral fingerprint of the first model. In some embodiments, the VES may store the calculated mean and variance so that the VES may compare the behavior of the first model to models that are subsequently evaluated by the VES. For example, the VES may store the mean and variance in a database and may use the stored mean and variance to determine whether a subsequent model treats samples from the data generation function in a similar manner. When the VES determines that the first model and a second, subsequent model, both treat samples from the data generation function equally (e.g., based on determining that there is not a statistical difference between the one or more means and variances), the VES may determine that the models are effectively the same (e.g., because the behavior of both models is the same).

In some embodiments, the VES may generate a second plurality of samples, where a second dimension and second range of feature values of the second plurality of samples matches the determined dimension and range of feature values. For example, the VES may utilize the data generating function to generate a second plurality of sample credit card applications. Samples from the second plurality of credit card applications may differ from the samples in the first plurality of credit card applications. However, the dimension and range of feature values across both pluralities of samples may be the same (e.g., a same number and type of features, having a same range of values).

The VES may input the second plurality of samples to a second AI model (e.g., a model provided by the developer later) to generate predictions. For example, the VES may input (e.g., via an application programming interface "API") each of the samples in the second set of samples to the second model. In response to providing a sample to the second model, the API may return one or more predictions. For example, when a sample is a credit card application, the second model (e.g., via the API) may return a prediction on whether an applicant will default on the credit card in the future. Because the samples from the second set differ from those of the first set, the API will not be able to perform the attack vector as described above (where the API predicts whether an assessment is being performed based on comparing the input samples to previously captured samples).

In some embodiments, the VES may determine a second mean and second variance for the second plurality of predictions generated by the second AI model. For example, the VES may compute a second mean for the sample default predictions and a second variance based on the predictions from the second plurality of credit card applications. The VES may compare the first mean and variance to the second mean and variance to compute a likelihood that the first model corresponds to the second model. For example, when the means and variances for the predictions from the two models are statistically similar (e.g., there is not a statistically significant difference between the two), the VES may determine that the two models are the same because their behavior is statistically similar. The VES may determine that the first model corresponds to the second model when the computed likelihood is greater than a threshold value. For example, when the means, and variances can be reasonably assumed to parametrize a distribution that is normally distributed, the VES may determine an acceptable threshold $\alpha_1$ for the dissimilarity of the means and an acceptable threshold $\alpha_2$ for the dissimilarity of the variances can be determined. The VES may then use an unpaired sample t-test assuming unequal variances and unequal sample sizes to determine whether the second mean differs from the first. An example formula that may be utilized by the VES for this test is shown below $t = \dfrac{\overline{X} - \overline{Y}}{s_p * \sqrt{\dfrac{1}{n_1} - \dfrac{1}{n_2}}}$ , where $\overline{X}, \overline{Y}$ are the sample means of the predictions from the first and second model, respectively, $s_p$ is the pooled standard deviation of the two sets of predictions, and $n_1, n_2$ are the sample sizes of the two sets of predictions. This test statistic can be used to reference a student's t-distribution for two-sided statistical tests to determine whether the acceptability threshold $\alpha_1$ is violated. If violated, the VES may determine that the second model is different from the first.

If the VES does not determine that the two models are distinct based on the t-test, the VES may proceed to evaluate the equality of the variances of the predictions of the two models. The VES may perform a two-sided F-test: the VES calculates the ratio of the variance of the predictions outputted by the first model and the variances of the predictions outputted by the second model. The VES may compare this ratio to the value of the F distribution with ($n_1$ - 1) and ($n_2$ - 1) degrees of freedom: if the ratio is less than the distribution evaluated at the point 1 - $\alpha_2$ or greater than the value of the distribution evaluated at the point $\alpha_2$ then the VES may "reject" the null hypothesis that the variances of the predictions output by the two models are unequal and the VES may determine that the second model is different from the first.

Alternatively, if the means and variances of the predictions outputted by each model cannot be reasonably assumed to parametrize normal distributions, the VES may employ non-parametric statistical tests to determine the similarity of behavior of the two models. The VES may select an acceptable threshold $\beta$ for the dissimilarity of the distributions of predictions from model 1 and model 2. The VES may calculate the "energy statistic" using the samples of predictions generated by the first model and second model $\boxed{\text{OBJ}}$ $T = \dfrac{n_1 n_2}{n_1 + n_2} E_{n1,n2}$ (X, Y), where $E_{n1,n2}$ = 2A - B - C and A, B, C are the arithmetic means of the differences between the predictions of model 1 and model 2, the differences between the predictions of model 1 and model 1, and the differences between the predictions of model 2 and model 2, respectively. The VES may treat this energy statistic T as the "alternative" hypothesis. The VES may construct a "null" hypothesis by performing a permutation test: the VES may pool the predictions from the first and second model. The VES may then re-assign each of the pooled predictions to a surrogate X or surrogate Y and calculate a T' energy statistic for the surrogate X with $n_1$ samples and surrogate Y with $n_2$ samples. The VES may repeat this re-assignment process many times such that all possible permutations r of assignments of predictions from model 1 and predictions from model 2 are assigned to new surrogates X and Y with $n_1$ and $n_2$ samples, respectively. The VES may compute the proportion of

permutations $\dfrac{k}{r}$ in which the surrogate-derived energy statistic T' >= T the observed energy statistic. If the proportion $\dfrac{k}{r} > \beta$ , the VES may "reject" the null hypothesis that the distributions of predictions from model 1 and model 2 are identical. In such a case, the VES may determine that model 2 is different from model 1.

Because the VES compares the behavioral fingerprints of the models themselves, even if the developer may make incremental improvements and/or changes between the first model and the second model, the VES will be able to compare the first model to the second model and determine whether both models have a same identity.

Brief Description of the Drawings

The above, below, and other objects and advantages of the disclosure will be apparent upon consideration of the following detailed description, taken in conjunction with the accompanying drawings, which should not be considered limiting of the breadth, scope, or applicability of these concepts, in which like reference characters refer to like parts throughout, and in which:

FIG. 1 shows an illustrative diagram of a verification enablement system, in accordance with some embodiments of the disclosure;

FIG. 2 shows another illustrative diagram of a verification enablement system, in accordance with some embodiments of the disclosure;

FIG. 3 shows an another illustrative diagram of a verification enablement system, in accordance with some embodiments of the disclosure;

FIG. 4 shows an illustrative diagram of an AI model, in accordance with some embodiments of the disclosure;

FIG. 5 shows an illustrative diagram of a network configuration, in accordance with some embodiments of the disclosure;

FIG. 6 shows an illustrative diagram of a computer system, in accordance with some embodiments of the disclosure;

FIG. 7 shows an illustrative flowchart of a process for verifying an identity of an AI model using a dataset, in accordance with some embodiments of the disclosure;

FIG. 8 shows an illustrative flowchart of a process for verifying an identity of an AI model using published data, in accordance with some embodiments of the disclosure;

FIG. 9 shows an illustrative flowchart of a process for verifying an AI model based on model behavior, in accordance with some embodiments of the disclosure;

FIG. 10 shows an illustrative flowchart of a process for determining a likelihood of whether two AI models correspond to each other, in accordance with some embodiments of the disclosure;

FIG. 11 shows an illustrative flowchart of a process for computing a likelihood that two AI models correspond to each other, in accordance with some embodiments of the disclosure; and

FIG. 12 shows an illustrative flowchart of a process for sharing data with a third party, in accordance with some embodiments of the disclosure.

Detailed Description

It will be appreciated that for simplicity and clarity of illustration, where considered appropriate, reference numerals may be repeated among the figures to indicate corresponding or analogous elements. In addition, numerous specific details are set forth to provide a thorough understanding of the embodiments described herein. However, it will be understood that the embodiments and examples described herein may be practiced without these specific details. In other instances, well-known methods, processes, procedures, and components, including software, firmware and hardware components, have not been described in detail so as not to obscure the embodiments described herein. Furthermore, the description is not to be considered as limiting the scope of the embodiments described herein.

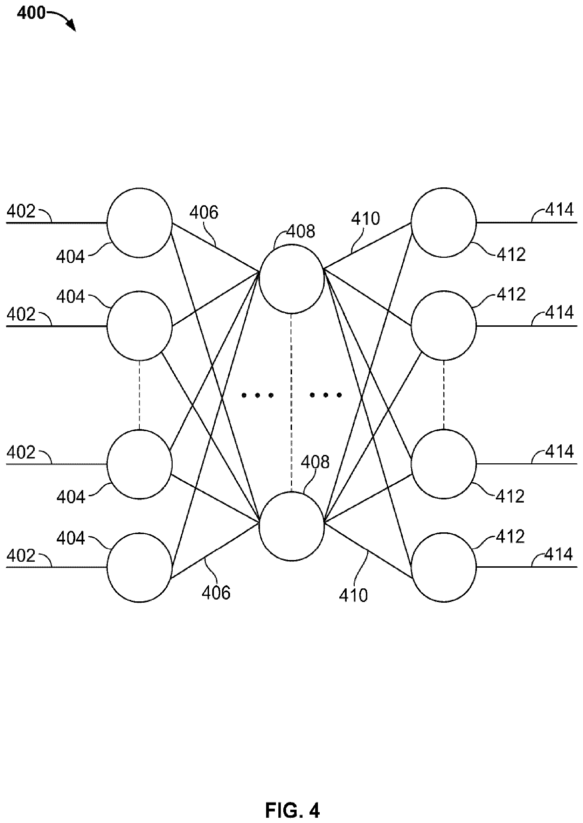

The illustrative embodiments described herein relate to artificial intelligence ("AI") systems. AI systems may include one or more AI models that, as referred to herein, may correspond to any code, process or, program that provides output data based on input data. For example, an AI model may evaluate input data to provide one or more predictions, decisions, images, text, and/or other outputs. In some embodiments, an AI model may comprise one or more interconnected nodes having weights between such nodes. In such instances, the AI model may be trained on one or more sets of labeled data and may update the weights between the one or more nodes based on the one or more sets of labeled data. An illustrative embodiment of an AI model is depicted and described further with respect to FIG. 4. The aforementioned description of an AI model is meant to be illustrative and not limiting. While the AI models discussed herein are associated with one or more example inputs and outputs, many different inputs and/or outputs may apply without departing from the scope of the present disclosure.

AI models are becoming increasingly integrated into decision-making systems. For example, banks may utilize an AI system in deciding whether to accept or reject a credit applicant. Because AI models may perform decisions based on a set of input data, stakeholders (e.g., the credit applicant, the bank itself, a regulatory authority, shareholders of the bank, etc.) may be interested in evaluating various factors of the AI model. For example, regulatory authorities may be concerned with determining whether an AI model involved in decision-making is discriminating against certain applicants. As another example, shareholders of a bank may be concerned with determining whether the AI model has good predictive ability (e.g., to predict whether a loan applicant will default in the future). Accordingly, a developer may attempt to minimize future defaults of accepted loan applicants by training an AI model to have the highest predictive ability regardless of any bias. In contrast, when the goal is to minimize bias, without regard to the predictive ability of the AI model, the developer may train the AI model to simply randomly accept or reject applicants.

Because the goals/incentives of the multiple stakeholders may be misaligned - each of the stakeholders may have an interest in ensuring that their individual goals are being met by testing or verifying the AI model. Accordingly, the multiple stakeholders may request periodic evaluations of an AI model to ensure that the stakeholders' goals are still being met. However, it is difficult for a non-developer stakeholder (e.g., any stakeholder that does not have access to the code of the AI model and/or evaluation) to determine whether different AI models are being utilized for two different assessments. A malicious developer may therefore be incentivized to provide different AI models for evaluation and/or assessment results depending on which stakeholder is performing the evaluation. For example, a malicious developer may use a first AI model with high predictive ability and high bias in a production environment (e.g., one with live customer data) for the bank and may use a second AI model with low predictive ability and minimal bias in an evaluation environment for the regulatory agency. Of course, by using a first, bias-free AI model for testing/regulatory approval and second AI model (developed without a concern for bias) for production, the developer would be attempting to trick or circumvent the regulatory authority. In another example, the malicious developer may be incentivized to provide assessments results for the regulatory authority that show low bias, whereas an AI model used by the bank is trained without regard for bias.

To prevent potential "gaming" of such incentives by a malicious developer, it is necessary to provide systems and method that allow for evaluating the sameness or distinctness of two AI models that are provided at two different times, in other words, whether an AI model that is used in a reference system is the same as one that is used in a test system (e.g., has not materially changed between the reference and the test). While prior art systems exist to determine whether any code has changed, such as by applying a hashing algorithm to the code to determine whether any change have been made in the code, AI models are constantly being changed and improved. This is particularly true for AI models that are in an environment where new information or training data may be added to the AI model (e.g., as a feedback loop) to improve the model's performance. Accordingly, simply applying a hashing algorithm (or directly comparing the code of the AI models) would not allow for developers to incrementally improve the AI model without failing a test for sameness. For example, an AI model with changes to the code to enhance speed performance may fail a test by a hashing algorithm even if the overall behavior of the model prior to and after the tweaks is the same. Furthermore, most developers would not like to directly expose the code of an AI model (e.g., for the fear of potential code theft or theft of other intellectual property).

For at least these reasons, it is preferable to allow for the comparison of AI models based on the behavior of the AI model (e.g., as opposed to a comparison of the code itself). For example, when the behavior (e.g., outputs) of a first AI model at a first time is statistically similar to the behavior of a second model at a second time, it is likely that the model has not materially changed between the first time and the second time and is therefore the same. Accordingly, when the systems and methods described herein evaluate the behavior of two AI models, as opposed to the code itself, a developer may incrementally improve their AI model without triggering the need for creating a new reference evaluation of the improved AI model. Furthermore, efficiencies may be achieved by regulatory authorities that may be able to verify in an efficient manner whether production versions of AI models are still in compliance with regulatory restrictions.

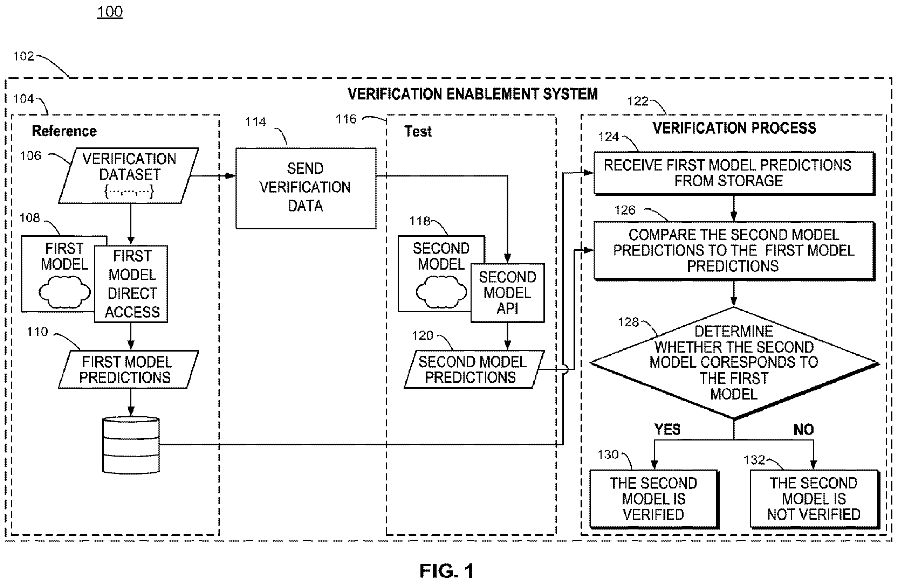

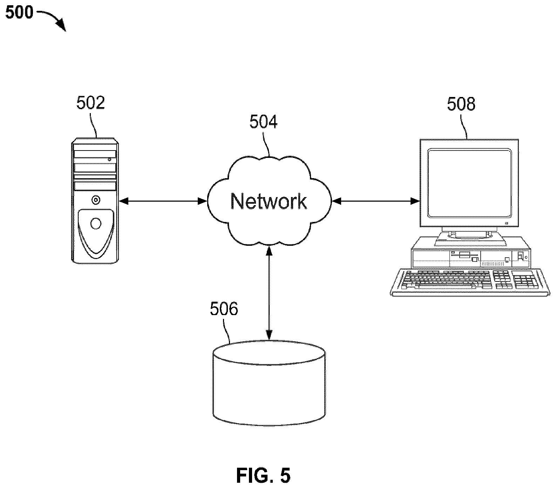

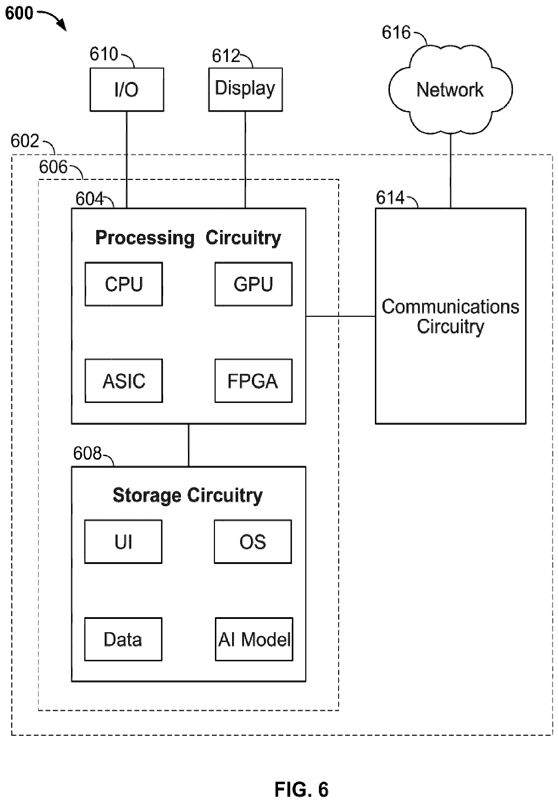

FIGS. 1-3 depict various verification enablement systems in accordance with some embodiments of the present disclosure. Any of the systems depicted in FIGS. 1-3 may be implemented using any of the hardware depicted and discussed later with respect to FIGS. 5-6. For example, any of the methods and systems described herein may be implemented across one or more of the servers, clients, and/or databases depicted in FIG. 5. The one or more servers, clients and/or databases depicted in FIG. 5 may be implemented in or on any of the hardware depicted in FIG. 6, without limitation to the components depicted in FIG. 6 (which are merely illustrative).

FIG. 1 depicts an illustrative system 100 comprising a verification enablement system (e.g., verification enablement system 102), in accordance with some embodiments of the present disclosure. In the embodiment depicted in FIG. 1, verification enablement system 102 may have direct access to a first AI model (e.g., first model 108 or a reference model) at a reference time (e.g., reference time 104) and may have application programming interface ("API") access to a second AI model (e.g., second model 118 or a test model) at a test time (e.g., test time 116). In some embodiments, the test time (e.g., test time 116) temporally follows the reference time (e.g., reference time 104). The verification enablement system (e.g., verification enablement system 102) may apply a verification dataset to both the first model (e.g., first model 108) and the second model (e.g., second model 118) and may compare the predictions from both models to determine whether the first model is the same as the second model.

For example, an entity, such as a bank, may periodically perform evaluations on their production and/or pre- production AI models (e.g., for compliance) to ensure that the bank's AI models are not using bias when determining whether to accept or reject a loan applicant. The bank may perform a first evaluation at a reference time (e.g., reference time 104) to set a baseline performance for an AI mode (e.g., first model 108) using verification data (e.g., verification dataset 106). In some instances, reference time 104 is a time that occurs before an AI model is used in a production environment using, e.g., "live" data and/or before the model has regulatory approvals to be used in a production environment.

Verification dataset 106 may be any set of data that is used by verification enablement system 102 as an input to first model 108 to generate first model predictions 110. Verification dataset 106 may comprise one or more samples that each comprise a dimension and range of feature values. Following from the bank example, verification dataset 106 may comprise multiple samples, such as loan applications. Each loan application may be associated with a first dimension and range of feature values. For example, an individual loan application may comprise data, such as an age, income level, credit score, gender, address, etc. of a loan applicant. In some instance, verification dataset 106 may be derived by a developer of an AI model (e.g., a developer of first model 108 and/or second model 118) or may be generated or received by a third party (e.g., a regulatory agency). In some instances, verification dataset 106 may be pseudo-randomly generated (e.g., each of fields of the samples may have pseudo-randomly generated data). In some instances, verification dataset 106 may be stored by verification enablement system 102 in a storage (e.g., storage circuitry 608 discussed in relation to FIG. 6 and/or a database, such as database 506 discussed in relation to FIG. 5).

Each sample of verification dataset 106 may be used as an input to first model 108 (e.g., by verification enablement system 102) to generate an output and/or predictions (e.g., first model predictions 110) by first model 108. In the instance where verification dataset 106 comprises loan applications, first model predictions 110 may comprise a probability that a loan applicant will default and/or may comprise a decision on whether to accept or reject a loan applicant. In some instances, verification enablement system 102 may have direct access to first model 108. For example, the code of model 108 may be copied to computer and/or server used to generate predictions from model 108 and the computer and/or server may directly input data from verification dataset 106 to generate first model predictions 110. By copying first model 106 to verification enablement system 102, the system ensures the verification dataset 106 is not captured by a malicious entity. For example, first model 108 may be run, by verification enablement system 102, on a virtual machine that does not have access to the Internet and/or has some or all network connectivity blocked.

In other instances (not depicted in FIG. 1), verification enablement system 102 may access first model 108 via an API of first model 108. For example, verification enablement system 102 may be running on a first computer and/or server (e.g., a computer and/or server depicted in FIG 5) of a first entity (e.g., of Credo AI). First model 108 may be stored on a computer, database, and/or server (e.g., server 502, client 508, or database 506 of FIG. 5) of a second entity (e.g., a bank). The first entity may access first model 108 via an API associated with first model 108 over, for example, a network connection (e.g., network 504 of FIG. 5 and/or network 616 of FIG. 6). However, in this instance, the second entity (e.g., bank) may maliciously interfere with a verification process, by capturing the verification dataset and implement either an API re-route attack to detect when the verification dataset is being applied to the model at a later time (e.g., at test time 116) or a data memorization attack. For example, when the bank detects that the verification dataset is being applied to the AI model at test time 116, the bank may instruct the API to route the input data to a legacy copy of first model 108, even though second model 118 is the model that is actual in use during test time 116. In this instance, the bank may trick the first entity into thinking that the predictions are from second model 118 and are therefore the same. In another example, the bank may perform a data memorization attack by programming the AI model and/or API to provide specific outputs for when a sample from the verification dataset is detected. For example, when a particular sample input is detected, the API may provide a response to verification enablement system 102 that matches a corresponding output in first model predictions 110, even if the output from second model 118 would differ from the provided response. For example, the API may detect verification dataset 106 and may provide a copy of the first model predictions 110 (e.g., without ever providing the verification data to second model 118).

While implementing either of the aforementioned attacks may result in a performance hit for a production system, modern systems may reduce the lookup latency to O(1). In some instances, such as a credit card application processing application, the developer may only review a small amount of input data per minute (e.g., 230 applications per minute for a bank). Therefore, even using a "slow" programming language (e.g., Python) the performance hit on a system attempting to implement either the re-routing attack or the data memorization attack is minimal relative to the timeframe expected for predictions. Accordingly, it is preferable to provide a system that is immune to attacks of this nature.

Verification enablement system 102 may prevent such "gaming" of the verification process by comparing first model predictions 110 (generated having direct access to first model 108 at reference time 104) to predictions that are derived by second model 118 at a second time (e.g., test time 116). Because verification enablement system 102 has direct access to first model 108 at reference time 104, verification dataset 106 is not exposed to the developer at reference time 104. Accordingly, test time 116 is the first time that the developer has exposure to verification dataset 106, and it would not be able to implement the API re-routing or the data memorization attacks described above. In the instance where the malicious developer does switch first model 108 for a tampered model (e.g., one that attempts to "game" the verification process) given some assumptions the likelihood that the developer could evade detection can be computed as described below. For a model with continuous outputs (e.g., a regression model) and floating-point precision f (an integer >=1), the probability $p(P)$ of second model 118 correctly guessing all of the samples in verification dataset 106 is $p(P) = (p(C)^f)^n$. As an example, if first model 108 and second model 118 are very similar, with a $p(C) = 0.99$, then on a 32-bit system, the probability of correctly outputting the predictions for a single randomly generated sample is approximately 0.72. To ensure that there is a less than or equal to 1% chance of passing the verification given the use of a "dirty" second model 118, n is calculated as:

$$\left\lceil \frac{\log\big(p(P)\big)}{\log\ \ \big(p(C)^f\big)} \right\rceil$$

After substituting for the 1% chance of passing given the use of a dirty second model 118:

$$\left\lceil \frac{\log(.01)}{\log(.72498)} \right\rceil = n$$

$$15 = n$$

In this instance verification enablement system 102 may act as an oracle that keeps track of both the verification data (e.g., verification dataset 106) and the stored predictions (e.g., first model predictions 110). In some embodiments, verification enablement system 102 may perform a verification process (e.g., verification process 122) to determine whether the first model corresponds to the second model. Verification enablement system 102 may, at 124, receive first model predictions from memory. For example, verification enablement system 102 may receive first model predictions 110 from storage (e.g., storage circuitry 608 discussed in relation to FIG. 6 and/or a database, such as database 506 discussed in relation to FIG. 5). At 126, verification enablement system compares the second model predictions to the first model predictions. For example, verification enablement system 102 may directly compare second model predictions 120 to first model predictions 110 (e.g., at 126) to determine (e.g., at 128) whether first model predictions 110 match second model predictions 120.

When the behavior of first model 108 has changed between reference time 104 and test time 116 (e.g., because second model 118 is substantively changed from that of first model 108), verification enablement system 102 may proceed to 132 where the second model is not verified. In contrast, when verification enablement system 102 determines that first model predictions 110 match the second model predictions 120 (e.g., based on verification enablement system 102 performing an exact match or a fuzzy matching), the verification enablement system may proceed to 130, where the second model is verified (e.g., where second model 118 is confirmed to behave similarly to that of first model 108). While the embodiment of FIG. 1 is contemplated to prevent an attack by acting as a centralized verification authority, in some embodiments, this embodiment may be undesirable to a developer (e.g., because a developer may not want to provide direct access to a model). Additionally, because verification dataset 106 is provided via the API of the second model at test time 116, the verification enablement system 102 must therefore use a verification dataset that is different from verification dataset 106 should the second model need to be tested again in the future (e.g., to prevent either of the API re-routing or data memorization attacks as described above). The aspects outlined above of FIG. 1 may be combined in any suitable combination, taken in part or as a whole with any of the figures or descriptions herein.

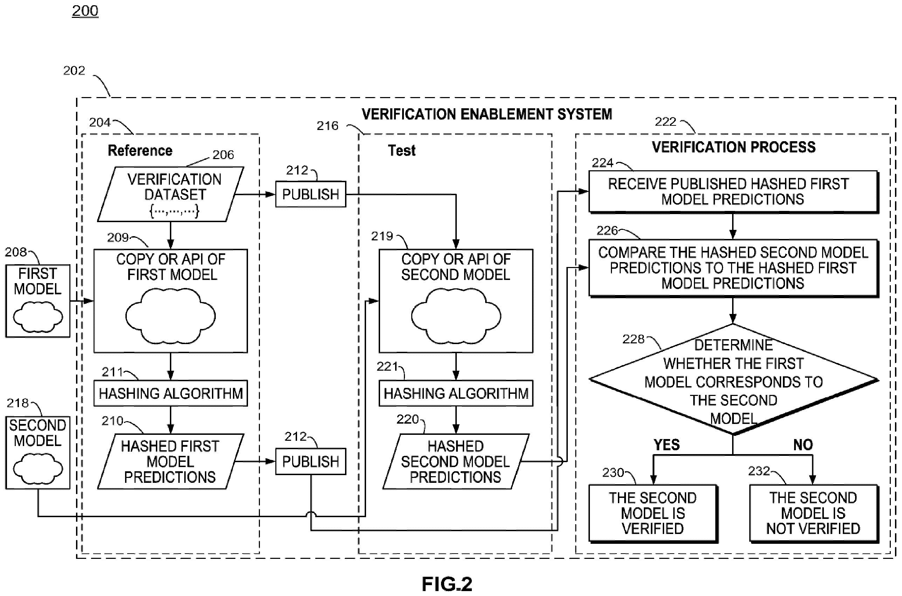

As previously discussed, in some instances, it may be undesirable to provide a centralized authority system for verification of an AI model (e.g., because a developer may not want to provide direct access to an AI model). In such embodiments, it may be desirable to provide a verification enablement system (e.g., as depicted in FIG. 2) that does not provide for direct access to an AI model. For example, a developer of a first AI model and/or second AI model may wish to provide API access only to such model. In such a system, a verification enablement system is described herein that enables decentralized verification. Rather than keeping the verification data and the output from an AI model private, the verification enablement system may publish the verification data and/or the output from the AI model (e.g., at 212 in FIG. 2). In some instances, the output from the AI model may be encrypted with a cryptographic hash, whereas the verification data may be published in plaintext. Because the output of the first AI model is encrypted, the outputs of the first AI model would not be easily observable to an outside party, and therefore the behavior of the first model would be protected from observation by a competitor (e.g., a competing bank). In this instance, the probability of a malicious developer guessing the correct predictions of a first AI model by using a second, dirty, AI model is at least as difficult as in the centralized case described above.

Because the verification enablement system publishes (e.g., at 212) the verification date in plaintext, a verification enablement system of this configuration may still be suspectable to a re-routing attack (e.g., one in which a dirty, second AI model detects whether the verification dataset is being applied to the API and re-routes the data to the first AI model instead of the second AI model).

For a malicious developer where the AI model is associated with a continuous feature distribution, the weight on the distribution data will be vanishingly small (i.e., the verification data will constitute a set of measure zero within a larger feature space). Accordingly, the system of the malicious developer will have a performance decrease for a re-routing attack that is negligible - and may therefore not disincentivize the malicious developer in performing such an attack.

In contrast, if the AI model of the malicious developer is associated with discrete feature spaces (e.g., those with categorical or binary features and relatively small dimension), the weight on the verification data may be large. For instance, for a model with ten binary features, a dataset of just 250 samples generated by sampling without replacement from the feature space would cover about 25% of the space. The resulting system of the malicious developer having a re-routing attack will have a performance decrease that is calculated as shown below. In some instances, the resulting performance decrease due to the re-routing attack may be large enough to disincentivize the malicious developer from performing such an attack.

$$Overall\ Performance = (.75 * Second\ Model\ Performance) + (.25 * First\ Model\ performance)$$

FIG. 2 depicts system 200 comprising a verification enablement system (e.g., verification enablement system 202) in accordance with some embodiments of the present disclosure. It should be noted that any of the components or processes of system 200 may be implemented in conjunction with any of the components or processes of system 100. For example, verification enablement system 202 may share some or all of the hardware, software, etc. of verification enablement system 102. FIG. 2 depicts verification enablement system 202, which verifies whether an AI model at reference time 204 corresponds to an AI model at test time 216.

In some embodiments, at reference time 204, verification enablement system 202 may receive verification dataset 206 from storage (e.g., storage circuitry 608 discussed in relation to FIG. 6 and/or a database, such as database 506 discussed in relation to FIG. 5). For example, verification dataset 206 may comprise a plurality of loan application samples, and each sample may be associated with a dimension and range of feature values. For example, a first loan application may be associated with an age, income level, gender, credit score, etc., associated with the loan applicant. Verification enablement system 202 may input each sample of verification dataset 206 to first model 208 (e.g., a first AI model) by, for example, either applying verification dataset 206 via direct access to first model 208 (e.g., by running first model 208 on a virtual machine) or via an API of first model 208 (e.g., by applying the samples of verification dataset 206 to first model 208 by transmitting such samples over a network connection to a server hosting first model 208). In some instances, first model 208 may be hosted on a computer of a third party, distinct from that of verification enablement system 202.

Based on applying verification dataset 206 to first model 208, first model 208 may provide one or more sets of predictions or other outputs. In some instances, where verification enablement system 202 has direct access to or a copy of first model 208, verification enablement system 202 may receive the output from first model 208 from a local machine (e.g., a virtual machine running on in conjunction with verification enablement system 202). In other instances, wherein first model 208 is accessible to verification enablement system 202 over a network connection via an API, verification enablement system 202 may receive the output from the first model over the same or a different network connection.

In some embodiments, in response to receiving the output from first model 208, verification enablement system 202 may apply (at 211) a cryptographic hash to the predictions from first model 208. For example, verification enablement system 202 may encrypt the output of first model 208 to generate hashed first model predictions 210, which, in some instances, may be published by verification enablement system 202.

In some instances, verification enablement system 202 may publish verification dataset 206 and/or hashed first model predictions 210. For example, verification enablement system 202 may store verification dataset 206 and/or hashed first model predictions 210 on a server that is accessible to any potential verifier of first model 208. In some instances, the medium may be a webpage on the Internet that is accessible to third parties (either with or without prior authentication and/or authorization). In some instances, it may not be preferable for a developer of first model 208 to allow for the publication of first model predictions 218. In such instances, verification enablement system 202 may publish verification dataset 206 and/or hashed first model predictions 210 by communicating and/or transmitting (e.g., over a network connection) only to relevant third parties (e.g., stakeholders or customers who have an interest in the validity of a verification, such as those customers or stakeholders who are consumers of the evaluations and/or assessments, authenticated users who provide a username and password, etc.). In other words, in some embodiments, the publishing of verification dataset 206 and/or hashed first model predictions 210 may comprise providing such data to only one additional party.

In some embodiments, verification enablement system 202 may store verification dataset 206 and/or hashed first model predictions 210 in storage (e.g., storage circuitry 608 discussed in relation to FIG. 6 and/or a database, such as database 506 discussed in relation to FIG. 5). In such instances, verification enablement system 202 may not publish verification dataset 206 and/or hashed first model predictions 210 until receiving a request from a third party (e.g., a stakeholder, such as a regulatory authority, who is interested the assessment or evaluation results). In some embodiments, verification enablement system 202 may publish verification dataset 206 and/or hashed first model predictions 210 prior to receiving a request for such data. For example, verification enablement system 202 may publish verification dataset 206 and/or hashed first model predictions 210 on a website accessible via the Internet prior to receiving any request to access verification dataset 206 and/or hashed first model predictions 210.

At test time 216, verification enablement system 202 receives the published verification dataset (e.g., verification dataset 206) and applies the verification dataset as input to second model 218. For example, at test time 216 (e.g., a year after reference time 204), verification enablement system 202 may receive verification dataset 206 from a website via the Internet. In some instances, verification dataset 206 is provided in plaintext and does not require any additional decryption to access the data within verification dataset 206.

In some embodiments, second model 218 may be stored on a server of a third party (e.g., server of the developer). In such instances, verification enablement system 202 may access second model 218 over a network connection via an API of second model 218. In other embodiments, verification enablement system 202 may access a copy of second model 218. For example, verification enablement system 202 may request a copy of second model 218 from the third party and may store a copy of second model 218 in a testing environment (e.g., a virtual machine accessible to verification enablement system 202). In either instance, in response to applying verification dataset 206 as input to second model 218, verification enablement system 202 may receive one or more outputs or predictions from second model 218. For example, in response to transmitting one or more loan applications in verification dataset 206, verification enablement system 202, may receive from second model 218, one or more predictions of whether a loan applicant will default in the future, a decision on whether to accept or reject the loan applicant, etc. The one or more outputs from second model 218 at test time 216 may be hashed by verification enablement system 202 at 221 to generate hashed second model predictions 220. The hashing algorithm (e.g., a cryptographic hash) may be the same as or distinct from the hashing algorithm applied at 211 by verification enablement system 202.

In some embodiments, verification enablement system 202 may implement illustrative verification process 222 to determine whether first model 208 corresponds to second model 218. For example, verification enablement system 202 may implement verification process 222 to determine whether output from first model 208 at reference time 204 is the same as output from second model 218 at test time 216. In some embodiments, verification process 222 may commence in response to verification enablement system 202 generating hashed second model predictions 220. In some embodiments, verification process 222 is performed by a third party. In such instances, verification enablement system 202 may facilitate the verification of first model 208 and second model 218 by providing hashed first model predictions 210 (e.g., by publishing first model predictions 210) and/or by providing hashed second model predictions 220 to the third party (e.g., by transmitting the hashed second model predictions over a network connection). Verification process 222 is meant to be illustrative and not limiting.

At 224, verification enablement system 202 may receive the published hashed first model predictions 210. For example, verification enablement system 202 may access a website and/or API accessible to verification enablement system 202 that comprises access to hashed first model predictions 210. In response to retrieving the published hashed first model predictions, verification enablement system 202 may, at 226, compare the hashed second model predictions to the hashed first model predictions. At 228, verification enablement system 202 may determine that first model 208 is similar or identical to second model 218 when hashed second model predictions 220 match hashed first model predictions 210 (and therefore verify the second model at 230) or may determine that first model 208 is similar or identical to the second model 218 when hashed second model predictions 220 do not match hashed first model predictions 210 (and therefore does not verify the second model at 232). Following from the banking loan application example, verification enablement system 202 may compare the first hashed results (e.g., generated by applying the loan applications to first model 208 at reference time 204) to the second hashed results (e.g., generated by applying the loan applications to second model 218 at test time 216). When the hashed results are the same across the reference time and the test time, verification enablement system 202 may verify the second model and confirm (e.g., to the stakeholders) that the two models are verified as the same and/or corresponding to each other.

Although verification enablement system 202 is depicted and discussed with respect to FIG. 2, verification enablement system 202 and any of the systems, components, software, processes, etc., may be implemented with any of the systems, components, software, processes, etc., discussed in relation to any of the other figures. The aspects of FIG. 2 outlined above may be combined in any suitable combination, taken in part or as a whole with any of the figures or descriptions herein.

In many settings, the feature space of interest may be too large to cover with a verification dataset (e.g., continuous features paces and discrete spaces with a modestly large dimension or categorical variable with many possible values). This makes the performance decrease associated with a re-routing attack negligible and thus may not always sufficiently deter a re-routing attack from a malicious developer.

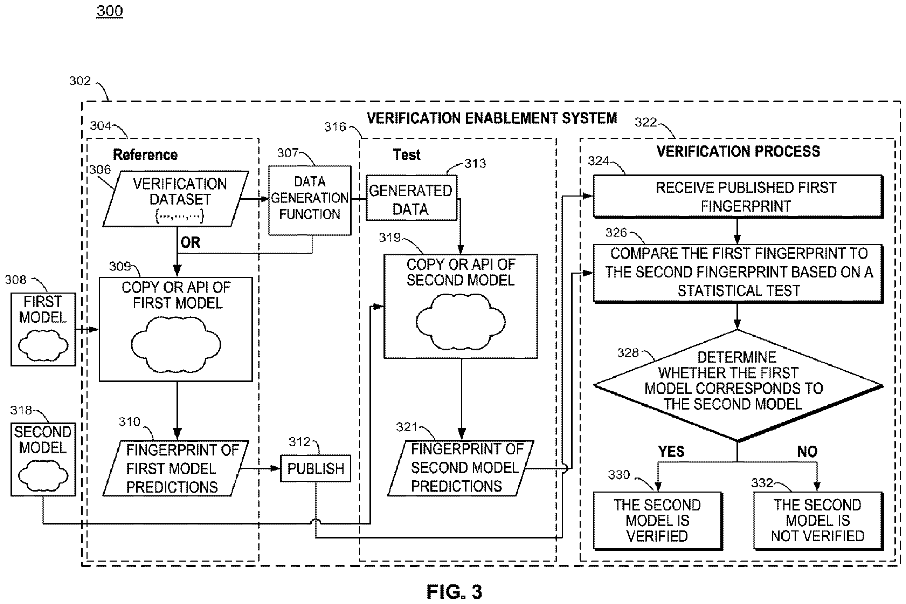

Accordingly, the systems and methods described herein may provide for a verification enablement system that closes this re-routing attack vector. FIG. 3 depicts illustrative system 300 comprising a verification enablement system (e.g., verification enablement system 302), in accordance with some embodiments of the present disclosure. In some embodiments, system 300 provides for a verification enablement system that prevents both re-routing attacks from a malicious developer, regardless of the size or type expected dataset for an AI model. In some embodiments, the verification enablement system is decentralized such that the system may be implemented across one or more devices, computers, servers, databases, etc. (e.g., any of the devices depicted and discussed in relation to FIG. 5). In some embodiments, the systems and methods described herein may provide for a verification enablement system that determines whether a first AI model corresponds to a second AI model by identifying a behavior of the first AI model and comparing the behavior of the first AI model to the behavior of a second AI model. When the behavior of the two models matches, the verification enablement system may determine that the first AI model corresponds to the second AI model. When the behavior of the first AI model does not correspond to that of the second AI model, the verification enablement system may determine that second model has been changed between a reference time and a test time. In some embodiments, various statistical tests are utilized to determine whether the behavior of a first AI model corresponds to a behavior of a second AI model.

As described above, verification enablement system 302 may determine whether a first AI model corresponds to a second AI model based on comparing the behavior of the two AI models. At or prior to reference time 304 (e.g., a pre-deployment verification time), verification enablement system 302 may construct a data generation function (e.g., data generation function 307) that creates data samples that are like a pre-deployment evaluation dataset provided by a model developer. For example, a developer of a model corresponding to a banking application may provide (e.g., to verification enablement system 302) a pre-deployment evaluation dataset that comprises a plurality of loan applications, and each loan application may be associated with corresponding fields (e.g., age, income, credit score, etc.). Each of the fields of the pre-deployment evaluation dataset may have a range of values (e.g., age may span 18-100, whereas a credit score may span 300 to 850).

Verification enablement system 302 may create and/or develop a data generation function (e.g., data generation function 307) that outputs samples that are within the scope of the pre-deployment evaluation dataset (e.g., loan applications where the ages span 18-100 and the credit scores span 300 to 850). In some embodiments, the data generation function may be implemented by training an AI model (e.g., an AI model trained on the pre-deployment evaluation dataset that generates sample loan applications). In other embodiments, the data generation function may be implemented using a pseudo-random generation function (e.g., ages in the sample loan application may be pseudo-randomly selected to be within the range of 18-100). While the prior two examples are illustrative ways that verification enablement system 302 may provide a data generation function (e.g., data generation function 307) other ways of generation data may be implemented without departing from the scope of the present disclosure. With sensitive information, such as proprietary data or banking loan applications, the distributions of the samples can be modified as to not expose the developer's proprietary data (e.g., as to not expose the actual distribution of the actual loan applications received by the bank). Furthermore, a data generation function may allow for the creation of a first diverse plurality of samples that may be applied to a first model and a second diverse plurality of samples that may be applied to a second model.

In an example, data generation function 307, for multinomial data, may output feature values that form the same range as the evaluation data but with different weights on each category. In another example, for continuous data, data generation function 307 may output normally distributed feature values with means and variances shifted by a small, random amount relative to the means and variances of the evaluation data variables from the evaluation dataset.

At reference time 304, verification enablement system 302 may apply a set of data from verification dataset 306 or data generation function 307 as input to first model 308. In some embodiments, verification dataset is a pre-deployment verification dataset provided by a developer of first model 308. In other instances, verification enablement system 302 may apply data that is output from data generation function 307 that generates a set of sample data based on a pre-deployment data verification dataset (e.g., as described above). Verification enablement system 302 may apply (at 309) either verification dataset 306 or output from data generation function 307 as input to a copy or API of first model 308. For example, verification enablement system 302 may access first model 308 over a network connection via an API of first model 308 (e.g., when first model 308 is hosted by a developer of first model 308 and access is provided via an API). In some instances, verification enablement system 302 may access a copy of first model 308. For example, a copy of first model 308 may be provided to verification enablement system 302 and may run on a virtual machine that is accessible to verification enablement system 302.

Upon providing the input of verification dataset 306 and/or output from data generation function 307 to first model 308, verification enablement system 302 may receive one or more outputs from first model 308. For example, in response to providing a sample loan application to first model 308, verification enablement system 302 may receive an output from first model 308. Verification enablement system 302 may apply multiple inputs (e.g., sample loan applications) to model 308 and, in response to applying multiple inputs, may receive a plurality of outputs (e.g., decisions on whether to accept or reject a loan applicant or a probability of the loan applicant defaulting in the future).

In some embodiments, verification enablement system 302 may generate a behavioral fingerprint (e.g., fingerprint 310) that is representative of a behavior of first model 308. For example, verification enablement system 302 may determine a first mean and a first variance for the plurality of predictions generated by first model 308. For example, verification enablement system 302 may compute a mean predicted level of default and variance for the predicted level of default output by first model 308 in response to applying the sample loan applications (e.g., generated by data generation function 307) to first model 308. The mean and variance may be based on one or more factors and/or outputs by first model 308. For example, verification enablement system 302 may additionally compute a separate mean and variance across different sample features, such as different age ranges, different credit scores, etc. For example, the VES may compute a first mean and variance for samples within the age range 18-25, a second mean and variance for samples with an age range of 26-40, a third mean and variance for samples with a credit score below 650 and a fourth mean and variance for samples with a credit score equal to or above 650. These means and variances, collectively, establish a behavioral fingerprint of the first model. In other words, the collection of means and variances across multiple different samples may, in some embodiments, capture the behavior of the first model across those certain samples. While the aforementioned behavioral fingerprint (e.g., fingerprint 310) is described with respect to means and variances of outputs from first model 308, any method of capturing the behavior of the output from first model 308 may be implemented without departing from the scope of the present disclosure (such as generating other summary statistics from the output of first model 308).

In some embodiments, verification enablement system 302 may publish the behavioral fingerprint of the output for first model 308 (e.g., fingerprint 310). For example, verification enablement system 302 may publish one or more means and variances of the outputs of first model 308 without publishing the actual output data from first model 308. As previously discussed, publishing the output may include, for example, adding fingerprint 310 to a webpage accessible to a stakeholder or may include transmitting fingerprint 310 to a stakeholder (e.g., a regulatory agency interested in the results of the verification). Additionally, data generation function 307 may be published as described above. In such an embodiment, there is no attack vector associated with caching of data inputs since future inputs will be pseudo-randomly generated based on the data generation function (e.g., data generation function 307) and therefore cannot be trivially matched to previous inputs.

Verification enablement system 302 may generate output from an AI model (e.g., second model 318) at a second time (e.g., test time 316, which follows reference time 304) to determine whether the AI model of a developer has changed between the first time (e.g., reference time 304) and the second time (e.g., test time 316). For example, verification enablement system 302 may receive, from data generation function 307, a set of generated data 313 that verification enablement system 302 may apply as input to second model 318 (e.g., at 319). In some embodiments, second model 318 may be stored on a server of a third party (e.g., a server of the developer or bank) and may be accessible to verification enablement system 302 only over a network connection via an API. However, it should be contemplated that any method of accessing and providing data to second model 318 is possible, such as copying second model 318 to a virtual machine running local to verification enablement system 302.

In response to applying generated data 313 to second model 318, verification enablement system 302 may generate a behavioral fingerprint of the second model predictions (e.g., fingerprint 321). Because verification enablement system 302 may compare the fingerprint of the first model predictions (e.g., fingerprint 310) to the fingerprint of the second model predictions (e.g., fingerprint 321), verification enablement system 302 may apply a similar manner of determining a behavioral fingerprint (e.g., fingerprint 321) for the output of second model 318 as used to determine the behavioral fingerprint (e.g., fingerprint 310) of the output of first model 308. As discussed above, there are numerous possible ways to generate a behavioral fingerprint for the output of first model 308 and second model 318 without departing from the scope of the present disclosure, which may include, for example, generating summary statistics for the output of first model 308 and the output of second model 318.

In some embodiments, verification enablement system 302 may implement illustrative verification process 322 to determine whether first model 308 corresponds to second model 318. For example, verification enablement system 302 may implement verification process 322 to determine whether the behavior of first model 308 at reference time 304 (e.g., based on fingerprint 310) is the same as the behavior of second model 318 at test time 316 (e.g., based on fingerprint 321). In some embodiments, verification enablement system 302 may determine whether first model 308 corresponds to second model 318 by comparing summary statistics of the output of first model 308 to the summary statistics of the output of the second model 318 by performing a statistical test. When the summary statistics do not differ by a statistically significant amount, first model 308 is deemed to correspond to second model 318 by verification enablement system 302.

In some embodiments, verification process 322 is performed by a third party (e.g., any of the stakeholders that are interested in the evaluation or verification, such as a regulatory authority). In other embodiments, verification process 322 is performed locally by verification enablement system 302. For example, the regulatory authority may receive fingerprint 310 at 324 by querying verification enablement system 302 over a network connection and, in response to the query, receiving a response from verification enablement system 302 comprising fingerprint 310. In another example, the regulatory authority may receive fingerprint 310 by accessing a website where fingerprint 310 was published by verification enablement system 302. In some embodiments, the regulatory authority may receive the second fingerprint using a similar method as described above with respect to the first fingerprint (e.g., by querying verification enablement system 302 over a network connection or accessing a website comprising the published first fingerprint). In response to receiving both fingerprint 310 and fingerprint 321, the regulatory authority may perform a statistical test to compare the first fingerprint (e.g., fingerprint 310) to the second fingerprint (e.g., fingerprint 321) at 326 to determine, whether the first model corresponds to the second model at 328.

For example, when fingerprint 310 and fingerprint 321 comprise one or more means and variances that can be reasonably assumed to parametrize a distribution that is normally distributed, the verification enablement system 302 may determine an acceptable threshold $\alpha 1$ for the dissimilarity of the means and an acceptable threshold $\alpha 2$ for the dissimilarity of the variances. Verification enablement system 302 may then use an unpaired sample t-test assuming unequal variances and unequal sample sizes to determine whether the second mean differs from the first. An example formula for this test is:

$$t \ = \frac{\overline{X} - \overline{Y}}{s_p \cdot \sqrt{\frac{1}{n_1} - \frac{1}{n_2}}}, \text{[OBJ]}$$

where $\overline{X}, \overline{Y}$ are the sample means of the predictions from the first and second model respectively, $s_p$ is the pooled standard deviation of the two sets of predictions, and $n_1$ and $n_2$ are the sample sizes of the two sets of predictions. This test statistic can be used to perform a student's t-distribution for two-sided statistical tests to determine whether the acceptability threshold $\alpha_1$ is violated. If violated, the VES may determine that the second model is different from the first.

If verification enablement system 302 does not determine that the two models are distinct based on the t-test, verification enablement system 302 may proceed to evaluate the equality of the variances of the predictions of the two models. For example, verification enablement system 302 may perform a two-sided F-test. Verification enablement system 302 may calculate the ratio of the variance of the predictions outputted by first model 308 and the variances of the predictions outputted by second model 318. Verification enablement system 302 may compare this ratio to the value of the F distribution with ($n_1$ - 1) and ($n_2$ - 1) degrees of freedom: if the ratio is less than the distribution evaluated at the point 1 - $\alpha_2$ or greater than the value of the distribution evaluated at the point $\alpha_2$, then verification enablement system 302 may "reject" the null hypothesis that the variances of the predictions output by the two models are unequal, and verification enablement system 302 may determine that second model 318 is different from first model 308 (e.g., may fail verification of the second model at 332).

Alternatively, if the means and variances of the predictions outputted by each of first model 308 and second model 318 cannot be reasonably assumed to parametrize normal distributions, verification enablement system 302 may employ non-parametric statistical tests to determine the similarity of behavior of the two models. Verification enablement system 302 may select an acceptable threshold $\beta$ for the dissimilarity of the distributions of predictions from first model 308 and second model 318. Verification enablement system 302 may calculate the "energy statistic" using the samples of predictions generated by the first model and second model, respectively. Verification enablement system 302 may do so by, for example, calculating the following quantity:

$$T \ = \frac{n_1 n_2}{n_1 + n_2} E_{n_1, n_2}(X, Y)$$

Where $E_{n1,n2}$ = 2A - B - C and A, B, C are the arithmetic means of the differences between the predictions of first model 308 and second model 318, the differences between the predictions of first model 308 and second model 318, and the differences between the predictions of second model 318 and second model 318, respectively. Verification enablement system 302 may treat this energy statistic T as the "alternative" hypothesis. Verification enablement system 302 may construct a "null" hypothesis by performing a permutation test: verification enablement system 302 may pool the predictions from first model 308 and second model 318. Verification enablement system 302 may then re-assign each of the pooled predictions to a surrogate X or surrogate Y and calculate a T' energy statistic for the surrogate X with n1 samples and surrogate Y with n2 samples. Verification enablement system 302 may repeat this re-assignment process many times such that all possible permutations r of assignments of predictions from model 1 and predictions from model 2 are assigned to new surrogates X and Y with $n_1$ and $n_2$ samples, respectively. Verification enablement system 302 may compute the proportion of permutations $\frac{k}{r}$ in which the surrogate-derived energy statistic T' >= T the observed energy statistic. If the proportion $\frac{k}{r} > \beta$, verification enablement system 302 may "reject" the null hypothesis that the distributions of predictions from first model 308 and second model 318 are identical. In such a case, verification enablement system 302 may determine that second model 318 is different from first model 308 (e.g., at 332). When verification enablement system 302 does not reject the null hypothesis, verification enablement system 302 may determine at 330 that first model 308 corresponds to second model 318.

Because verification enablement system 302 compares behavioral fingerprints (e.g., behavioral fingerprint 310) of first model 308 to behavioral fingerprint 321 of second model 318 (e.g., instead of checking for an exactness of the output by the two models), even if the developer makes incremental improvements and/or changes to an AI model between reference time 304 and test time 316, verification enablement system 302 may determine and compare first model 308 to second model 318 to determine whether both models have a same behavioral identity. In other words, when a model evaluated at reference time 304 behaves the same way as a model evaluated at test time 316 using randomly generated data (e.g., based on data generation function 307), the two models are identified as the corresponding to each other.

The aspects outlined above of FIG. 3 may be combined in any suitable combination, taken in part, or as a whole with any of the figures or description herein.

FIG. 4 shows an illustrative diagram of an AI model in accordance with some embodiments of the disclosure. Model 400 may vary in form or type, such as a trained machine learning model, a trained neural network, a linear regression model, a logistic regression model, a decision tree, a linear discriminant analysis model, a Naive Bayes model, a support vector machine, a random forest, etc. In some embodiments, model 400 may be utilized by the systems described herein (e.g., any of verification enablement system 102, 202 and/or 302) to enable verification of a first model and a second model (e.g., multiple versions of model 400, such as first model 108, second model 118, first model 208, second model 218, first model 308, and/or second model 318). For example, model 400 may be a trained AI model, such as a neural network, used to predict whether a loan applicant will default on a loan, and/or determine whether to accept or reject a loan applicant.

Model 400 is depicted having input nodes 404, hidden nodes 408, and output nodes 412. Input nodes 404 are connected to hidden nodes 408 via connection 406, and hidden nodes 408 are connected to output nodes 412 via connection 410. Although model 400 is depicted having only three layers, any number of layers may be present, each layer may comprise any number of nodes and each node may have any number of connections to other nodes. Input data elements 402 are provided as input for input nodes 404, and output data elements 414 are the output generated by model 400 from output nodes 412. In some embodiments, a verification enablement system applies input data (such as verification dataset 106, 206 and/or 306 and/or generated data 313) as inputs to input data elements 402 to generate an output (e.g., first model predictions 110, second model predictions 120, and/or any of the output used to generate hashed first model predictions 210, hashed second model predictions 220, fingerprint 310 and/or fingerprint 321.

In some embodiments, model 400 is a trained AI model. For example, model 400 may comprise weights assigned to connections 406 and 410. In some embodiments, a developer may train model 400 by computing the weights to assign to each of connections 406 and 410. In other embodiments, a verification enablement system may train model 400 (e.g., in order to use model 400 to generate data). For example, a verification enablement system may assign initial weights to connections 406 and 410 based on an approximation of the distribution of weights, may randomly assign weights (e.g., a randomly assigned value between zero and one), or may initialize all weights to the same value (e.g., all 0.1). In some embodiments, the verification enablement system (e.g., any of verification enablement systems 102, 202 and/or 302) may select the weights based on parameters specific to a client (e.g., an expected range of age data or credit score data for a loan application data-generating function).

After assigning weights to connections 406 and 410, the verification enablement system may compare the output of the model to determine whether it corresponds to the provided input. For example, the verification enablement system may determine whether the generated loan application meets the parameters defined by a client (e.g., the age is within an expected age range and the credit score is within an expected credit score range) and may update the weights of the model when the outputs do not correspond. In some embodiments, the verification enablement system may train model 400 using a training dataset (e.g., a dataset received from a client and/or developer).

In some embodiments, the verification enablement system accesses model 400 over a network connection (e.g., described further with respect to FIG. 5 and FIG. 6). When the verification enablement system accesses model 400 over a network connection the verification enablement system may receive, prior to initiating communication with model 400, indications of an API associated with model 400. In some embodiments, the API associated with model 400 may at least provide for a method of applying an input to model 400 and a method for receiving an output that corresponds to the applied input. In some embodiments, the API may provide additional functionalities beyond those described herein (such as a functionality to copy model 400 in its entirety to a virtual machine of the verification enablement system).

While model 400 is depicted having four input nodes 404, any number of input nodes may be used without departing from the scope of the present disclosure. In some embodiments, the verification enablement system (e.g., running on server 502) may select the number of input nodes 404 to model 400 based on the number of components of the input data. For example, the number of input data elements 402 may be computed based on a number of factors evaluated in the loan application (e.g., an input node for age, an input node for income, an input node for gender, etc.). In some embodiments, the input to model 400 is a vector comprising training data, validation data, verification data (e.g., any of verification dataset 106, 206 and/or 306) and/or generated data (e.g., generated data 313).

In some embodiments, when the verification enablement system is training model 400, the verification enablement system may apply a training dataset to input nodes 404 and may compute values for hidden nodes 408 based on the input applied to input nodes 404 and the weights of connections 406. As an example, when the weights of connections 406 are 0.1 (e.g., because they were instantiated to initial values of 0.1) and the values of input nodes 404 are all 1, the verification enablement system may compute the values for hidden nodes 408 to be all 0.4. Although model 400 is depicted having only one layer of hidden nodes, any number of layers having hidden nodes may be present in model 400.

In some embodiments, the verification enablement system may compute an error value between input data elements 402 and output data elements 414 to generate an error value and may update the weights between nodes based on the error value. For example, the verification enablement system may compute a first error value corresponding to output data elements 414 (e.g., having a value of 0.8) by subtracting 0.8 and an expected output value (e.g., an expected probability of not having a default on a loan application of 0.9). In such instances, the verification enablement system may use the error value to continually tweak the weights for connections 406 and 410 between input nodes 404 and output nodes 412 (e.g., until the error value is an acceptable value such that model 400 is not overfit to the input data nor underfit to the input data).

In some embodiments, the verification enablement system may generate output from model 400 by applying input data (e.g., any of verification dataset 106, 206 and/or 306 and/or generated data 313). For example, the verification enablement system may provide input data elements 402 (e.g., data corresponding to any of verification dataset 106, 206 and/or 306 and/or generated data 313) as the input for input nodes 404 when assessing model 400. For example, verification enablement system 102 may receive a vector of input elements from a validation dataset (e.g., age, gender, income, etc., of a loan applicant) and may apply each input element from the vector to each input data element 402 (e.g., age to a first input data element, gender to a second input data element, etc.). The verification enablement system may utilize the weights of connections 406 and 410 to compute the values for each of the nodes in model 400. For example, the verification enablement system 302 may use the weight of connection 406 between input node 404 and hidden node 408 to compute the value for hidden node 408 (e.g., by multiplying a value of input node 404 by a weight of connection 406). In some embodiments, the verification enablement system may iterate through each element or sample in the input data (e.g., any of verification dataset 106, 206 and/or 306 and/or generated data 313) when generating the output. For example, when the input comprises 1,000 loan applications, the verification enablement system may generate 1,000 different outputs by iterating each loan application through model 400 as described above. In some embodiments, the verification enablement system may compare the output of two illustrative versions of model 400 (e.g., first model 108, 208, and/or model 308 at reference time 104, 204, or 304, respectively or second model 118, 218, and 318 at test time 316, respectively) either directly (e.g., by performing an exact match to the outputs) or by generating a behavioral fingerprint for the output of the two models (as described above and below).

The aspects outlined above of FIG. 4 may be combined in any suitable combination, taken in part, or as a whole with any of the figures or description herein.

FIG. 5 shows an illustrative diagram of a network configuration, in accordance with some embodiments of the disclosure. System 500 is depicted having server 502, network 504, database 506 and client 508. In some embodiments, the verification enablement system (e.g., any of verification enablement system 102, 202 and 302) may comprise some or all the devices depicted in system 500. While FIG. 5 depicts only one type of each device to avoid over complicating the drawing, multiples of each of the devices may be used without departing from the scope of the present disclosure.

Additionally, various configurations of devices and networks may be implemented without departing from the scope of the present disclosure. For example, connections between devices and networks may be wired or wireless. Server 502 may include one or more computing devices (e.g., computing device 600 discussed further below with respect to FIG. 6) and may implement one or more aspects of the verification enablement system and/or any of the components, systems, or processes described above or below. Server 502 is communicatively coupled to client 508 and database 506 via network 504. Network 504 may be any combination of component(s) and/or device(s) that enables server 502 to communicate with database 506 and/or client 508.

Database 506 may include one or more computing devices (e.g., computing device 600 discussed further below with respect to FIG. 6) and may implement one or more aspects of the verification enablement system and/or any of the components, systems, or processes, described above or below. In some embodiments, database 506 may be implemented on a remote device (e.g., a server on a different local network than server 502). In such instances, server 502 may communicate with database 506 over a network connection of server 502 that is connected to the Internet via a router of network 504. In some embodiments, database 506 is local to server 502 (e.g., database 506 may be implemented on storage circuitry that is local to server 502, such as storage circuitry 608). In such instances server 502 may communicate with database 506 via Serial ATA bus.

Database 506 may store any data and/or dataset described herein, such as verification dataset 106, 206, 306, first model 108, 208, and 308, second model 118, 218, and 318, the output of any of the first models or second models, some or all of the code of the verification enablement system, data generation function, any cryptographic keys used for any of the hashing functions described herein, etc. In some embodiments, database 506 is implemented on a computing device, such as computing device 600, having a general-purpose processor and/or a specialized processor. In such embodiments, some of the elements of the processes and methods described herein may occur on server 502 serially or in parallel to processing occurring on database 506.

Client 508 is communicatively coupled to server 502 and/or database 506 via network 504. Client 508 may be implemented on a computing device, such as computing device 600. In some embodiments, client 508 stores (either locally or remote from client 508) a model (e.g., model 400). In some embodiments, client 508 may train a model (e.g., model 400 and/or model 104, based on a training dataset) and may provide an API to the verification enablement system to access the model 400 stored on client 508. In some embodiments, in response to receiving the model (e.g., model 400), the verification enablement system may perform a verification of model 400 as described above and below. Upon performing the verification, server 502 may store the results of such verification in a database (e.g., database 506) and/or may publish the results of such verification (e.g., by providing access to the results stored in database 506 via a website). In other embodiments, the verification enablement system may transmit the verification results (e.g., as hashed results or as a fingerprint, such as fingerprint 310 and fingerprint 321) over network 504.

The aspects outlined above of FIG. 5 may be combined in any suitable combination, taken in part, or as a whole with any of the figures or description herein.

FIG. 6 shows an illustrative diagram of a computer system, in accordance with some embodiments of the disclosure. FIG. 6 shows an illustrative, generalized embodiment of illustrative computing device 600. Computing device 600 is depicted having components that are internal and external to computing device 600, for example, internal components 602 includes control circuitry 606, which includes control circuitry 606 and storage circuitry 608, and communications circuitry 614. External components may include input/output (hereinafter "I/O") path 610, display 612 and network 616. In some embodiments, any of I/O path 610, display 612 and network 616 may be included as internal components 602.

I/O path 610 may provide content and data to control circuitry 606 and control circuitry 606 may be used to send and receive commands, requests, and other suitable data using I/O path 610. I/O path 610 may connect control circuitry 606 (and specifically processing circuitry 604) to one or more communications paths (described below). I/O functions may be provided by one or more of these communications paths, but are shown as a single path in FIG. 6 to avoid overcomplicating the drawing.

Control circuitry 606 may be based on any suitable processing circuitry such as control circuitry 606. As referred to herein, processing circuitry should be understood to mean circuitry based on one or more microprocessors, microcontrollers, digital signal processors, programmable logic devices, field-programmable gate arrays (FPGAs), application-specific integrated circuits (ASICs), GPUs, etc., and may include a multiple parallel processing cores or redundant hardware. In some embodiments, control circuitry 606 may be distributed across multiple separate processors or processing units, for example, multiple of the same type of processors or multiple different processors. In some embodiments, control circuitry 606 executes instructions for system 100 stored in memory (i.e., storage circuitry 608). Specifically, control circuitry 606 may be instructed by the verification enablement system to perform the functions discussed above and below. For example, the verification enablement system may provide instructions to control circuitry 606 to determine whether a first AI model (e.g., model 400) corresponds to a second AI model (e.g., model 400) or to perform any of the processes described herein. In some implementations, any action performed by control circuitry 606 may be based on instructions received from or by a verification enablement system.

In some embodiments, control circuitry 606 may include communications circuitry 614 suitable for communicating with other networks (e.g., network 616) or servers (e.g., server 502 or database 506). The instructions for carrying out the above-mentioned functionality may be stored on database 506. Communications circuitry 614 may include a modem, a fiber optic communications device, an Ethernet card, or a wireless communications device for communicating with other devices. Such communications may involve the Internet or any other suitable communications networks or paths (e.g., via network 616/304). In addition, communications circuitry 614 may include circuitry that enables peer-to-peer communication between devices.

Memory may be an electronic storage device provided as storage circuitry 608 that is part of control circuitry 606. As referred to herein, the phrase "electronic storage device" or "storage device" should be understood to mean any device for storing electronic data, computer software, or firmware, such as random-access memory, read-only memory, hard drives, optical drives, solid state devices, quantum storage devices, or any other suitable fixed or removable storage devices, and/or any combination of the same. Storage circuitry 608 may be used to store various types of data herein, such as such as verification dataset 106, 206, 306, first model 108, 208, and 308, second model 118, 218, and 318, the output of any of the first models or second models, some or all of the code of the verification enablement system, data generation function, any cryptographic keys used for any of the hashing functions described herein, etc.. Nonvolatile memory may also be used (*e.g.,* to launch a boot-up routine and other instructions). Cloud-based storage (e.g., database 506 when communicatively coupled to server 502 via the Internet) may be used to supplement storage circuitry 608 or may be utilized instead of storage circuitry 608.

A user may send instructions to control circuitry 606 using I/O path 610 using an external device such as a remote control, mouse, keyboard, touch screen, etc. In some embodiments, control circuitry 606 correlates a user input with a location of a user interface element and performs an action based on the selected user interface element. Display 612 may be provided as a stand-alone device or integrated with other elements of computing device 600. For example, display 612 may be a touchscreen or touch-sensitive display and may be combined with I/O path 610.

The verification enablement system may be implemented using any suitable architecture. For example, the verification enablement system may be a stand-alone application wholly implemented on computing device 600. In such an approach, instructions of the application are stored locally (e.g., in storage circuitry 608). In some embodiments, system 100 is a client/server-based application. Data for use by a thick or thin client implemented on computing device 600 is received on demand by issuing requests to a server remote from the computing device 600. In some embodiments, system 100 is downloaded and interpreted or otherwise run by an interpreter or virtual machine (run by control circuitry 606).

The aspects outlined above of FIG. 6 may be combined in any suitable combination, taken in part, or as a whole with any of the figures or description herein.

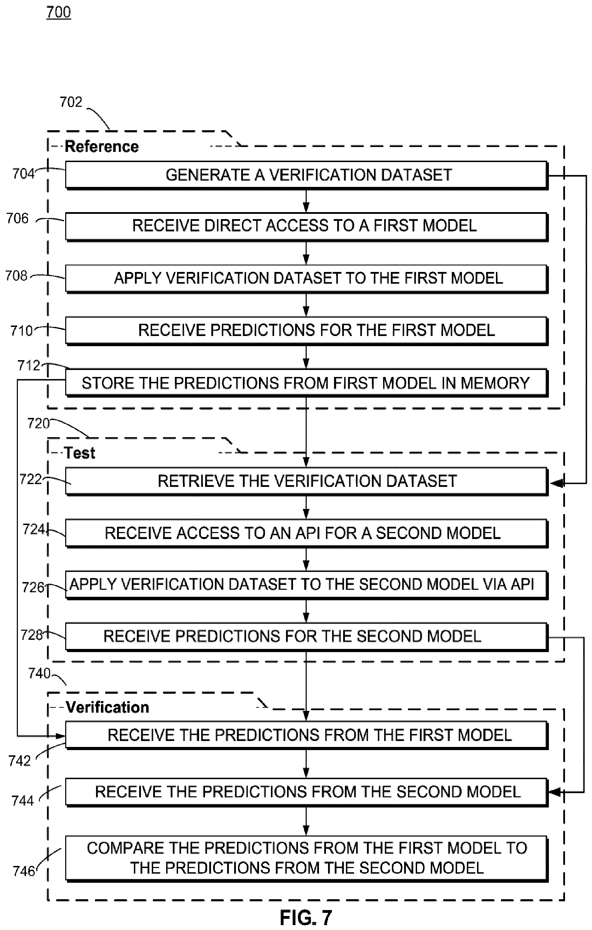

FIG. 7 shows an illustrative flowchart of a process for verifying an identity of an AI model using a dataset, in accordance with some embodiments of the disclosure. For example, any of verification enablement systems 102, 202, and/or 302 implementing process 700 may be encoded onto a non-transitory storage medium (e.g., storage circuitry 608) as a set of instructions to be decoded and executed by processing circuitry (e.g., processing circuitry 604 of control circuitry 606). Processing circuitry may, in turn, provide instructions to other sub-circuits contained within control circuitry 606. It should be noted that process 700, or any step thereof, could be performed on, or provided by, any of the devices shown in FIGS. 5-6 and/or any of verification enablement systems 102, 202, and/or 302.

In some embodiments, process 700 may correspond to system 100 of FIG. 1 where control circuitry 606 may verify the identity of an AI model using a dataset (e.g., a dataset stored on a centralized verification system). In some embodiments, process 700 may be characterized by one or more distinct time periods in which elements of process 700 may occur, for example, one or more elements of process 700 may occur during reference time 702, where process 700 may generate output for a first AI model; during test time 720, where process 700 may generate output for a second AI model; and during verification time 740, where process 700 may determine whether the first model corresponds to the second model. However, reference time 702, test time 720, and verification time 740 are merely intended to be illustrative and not limiting. The elements depicted in process 700 may vary in order or execution time without departing from the scope of the present disclosure. Additionally, one or more components, systems, or devices may execute various portions of process 700. For example, first control circuitry 606 may execute process 700 at reference time 702 and second control circuitry 606 may execute process 700 at test time 720, either in parallel or in sequence.

At 704, control circuitry 606 (e.g., any control circuitry running or executing a verification enablement system such as verification enablement system 102, 202, and/or 302) generates a verification dataset (e.g., verification dataset 106). For example, control circuitry 606 may receive, over a network connection from a client, the set of verification data (e.g., verification dataset 106).

At 706, control circuitry 606 receives direct access to a first model. For example, control circuitry 606 may request a copy of first model 108 from a client. The client may, in response to receiving the request from control circuitry 606, transmit the copy of first model 108 over a network connection (e.g., network 504). In some embodiments, control circuitry 606 may store and execute the code of first model 108 in a virtual machine that is accessible to control circuitry 606, but not to outside observers (e.g., a virtual machine with no network access). By running the code of first model 108 locally, without access to an external network, the verification enablement system may ensure that the verification dataset (e.g., verification dataset 106) is not leaked to an outside observer.

At 708, control circuitry 606 applies the verification dataset (e.g., verification dataset 106) to the first model (e.g., first model 108). For example, control circuitry 606 may extract multiple sample loan applications from verification dataset 106 and may copy the extracted samples to the virtual machine running the code of first model 108. Control circuitry 606 may apply each loan application as input to first model 108. In response to applying the verification dataset to first model 108, at 710, control circuitry 606 may receive predictions for the first model (e.g., first model predictions 110). For example, for each loan application sample, control circuitry 606 may receive an indication of whether to accept or reject the loan applicant and/or a probability that the loan applicant will default in the future.

At 712, control circuitry 606 stores the predictions from the first model in memory. For example, control circuitry 606 may store the predictions from the first model (e.g., first model predictions 110) on storage circuitry 608. In some embodiments, the storage circuitry may be remote from control circuitry 606 (e.g., on a database, such as database 506). In such embodiments, control circuitry 606 may transmit first model predictions 110 to database 506 over a network connection, such as network 504. In some embodiments, network 504 may be isolated from the Internet so that the first model predictions may not be inadvertently exposed to malicious actors.

In some embodiments, control circuitry 606 may receive the verification dataset (at 722) during test time 720. In some embodiments, test time 720 may follow reference time 702. For example, test time 720 may be a year after reference time 702 so that a regulatory agency can ensure that no material changes were made to an AI model of a developer over the course of the year. At 722, control circuitry 606 receives the verification dataset (e.g., verification dataset 106). In some embodiments, during test time 702, control circuitry 606 stores the verification dataset in storage 608 and/or database 506 so that the verification dataset may be received at a later time (e.g., test time 720).

At 724, control circuitry 606 receives access to an API for a second model. For example, control circuitry 606 may query a client (e.g., client 508) for access to an AI model stored on or by client 508. Client 508 may respond by providing an identification of an API for accessing the second model (e.g., second model 118). In some embodiments, control circuitry 606 may utilize the API to provide access to the second model (e.g., second model 118). For example, control circuitry 606 may utilize the API to format data from verification dataset 106 as input to second model 118. In response to formatting the data, control circuitry 606 may apply the verification dataset to the second model via the API at 726. For example, control circuitry 606 may transmit the formatted data to the second model over network 504 to client 508 (or any device hosting second model 118).

At 728, control circuitry 606 receives predictions for the second model. For example, control circuitry 606 may automatically receive second model predictions 120 in response to transmitting the verification dataset to second model 118 via the API. The second model predictions may, for example, include indications of whether a loan applicant should be rejected or accepted and/or may indicate a probability that a loan applicant will default in the future (as discussed above).

At verification time 740, control circuitry 606 may perform a verification to determine whether the output of the first model (e.g., first model 108) corresponds to the output of the second model (e.g., second model 118). At 742, control circuitry 606 receives the predictions from the first model. For example, the predictions from the first model (e.g., first model predictions 110) may be stored in storage 608 or a database such as database 506 that is local to control circuitry 606. Control circuitry 606 may retrieve from storage 608 and/or database 506 first model predictions 110.

At 744, control circuitry 606 receives the predictions from the second model. For example, control circuitry 606 may receive second model predictions 120 via an API associated with second model 118 (from client 508). In another example, control circuitry 606 may receive second model predictions 120 from a database (e.g., database 506).

At 746, control circuitry 606 compares the predictions from the first model to the predictions from the second model. For example, control circuitry 606 may compare first model predictions 110 to second model predictions 120 to determine whether for the same input (e.g., verification dataset 106) if the predictions by both models is the same. When the output from the first model 108 is the same as the output from second model 118, the verification enablement system (via control circuitry 606) may determine that the second model is verified. When the output from the first model 108 is not the same as the output from second model 118, the verification enablement system (via control circuitry 606) may determine that the second model is not verified.

It is contemplated that the steps or descriptions of FIG. 7 may be used with any other embodiments and processes of this disclosure. In addition, the descriptions described in relation to the process of FIG. 7 may be done in alternative orders or in parallel to further the purposes of this disclosure.

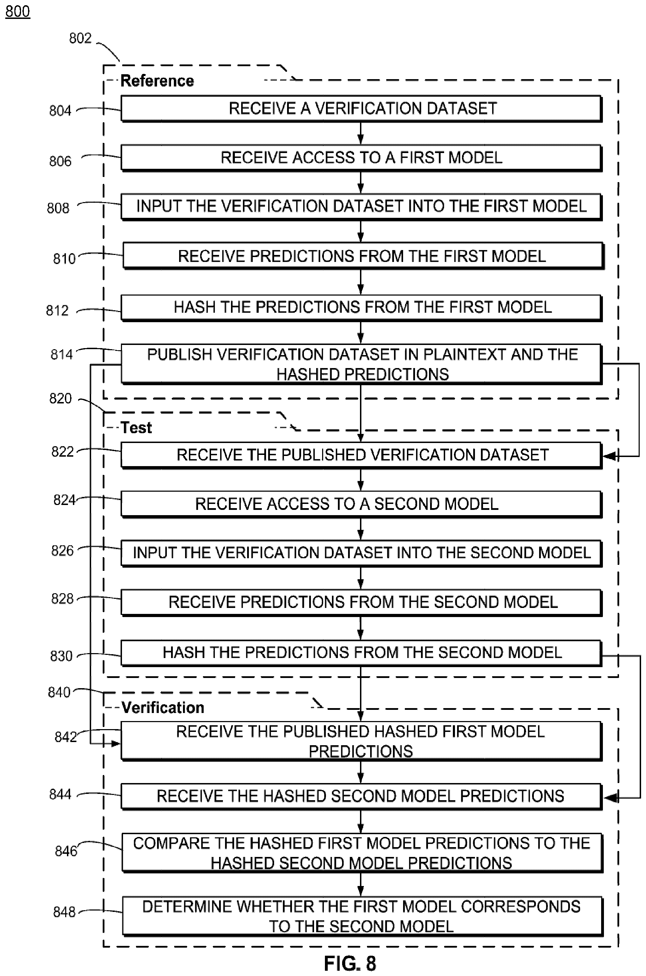

FIG. 8 shows an illustrative flowchart of a process for verifying an identity of an AI model using published data, in accordance with some embodiments of the disclosure. For example, any of verification enablement systems 102, 202, and/or 302 implementing process 800 may be encoded onto a non-transitory storage medium (e.g., storage circuitry 608) as a set of instructions to be decoded and executed by processing circuitry (e.g., processing circuitry 604 of control circuitry 606). Processing circuitry may, in turn, provide instructions to other sub-circuits contained within control circuitry 606. It should be noted that process 800, or any step thereof, could be performed on, or provided by, any of the devices shown in FIGS. 5-6 and/or any of verification enablement systems 102, 202, and/or 302.

In some embodiments, process 800 may correspond to system 200 of FIG. 2 where control circuitry 606 may verify the identity of an AI model using a published data (e.g., using a verification dataset that is published in plaintext and published hashed outputs from an AI model). In some embodiments, process 800 may be characterized by one or more distinct time periods in which elements of process 800 may occur, for example, one or more elements of process 800 may occur during reference time 802, where process 800 may generate output for a first AI model, during test time 820, where process 800 may generate output for a second AI model, and during verification time 840, where process 800 may determine whether the first model corresponds to the second model. However, reference time 802, test time 820, and verification time 840 are merely intended to be illustrative and not limiting. The elements depicted in process 800 may vary in order or execution time without departing from the scope of the present disclosure. Additionally, one or more components, systems, or devices may execute various portions of process 800. For example, first control circuitry 606 may execute process 800 at reference time 802 and second control circuitry 606 may execute process 800 at test time 820, either in parallel or in sequence.

At 804, control circuitry 606 (e.g., any control circuitry running or executing a verification enablement system such as verification enablement system 102, 202, and/or 302) receives a verification dataset (e.g., verification dataset 206). For example, control circuitry 606 may receive (e.g., based on a request), over a network connection from a client, the set of verification data (e.g., verification dataset 206). In some embodiments, control circuitry 606 may generate verification dataset 206 based on data samples provided by a client (e.g., client 508). For example, a developer of first model 208 may provide a plurality of sample loan applications. Based on the dimensions and ranges of feature values, control circuitry 606 may generate a verification set that is modeled based on the sample loan applications. For example, the verification set may comprise sample loan applications with age ranges and a distribution of ages that match or are similar to those in the sample from the developer.

At 806, control circuitry 606 may receive access to a first model (e.g., first model 208). In some embodiments, control circuitry 606 may receive access to the first model via an API, by, for example, communicating with a client associated with the first model and receiving an indication of the API for the first model. In some embodiments, control circuitry 606 may access a copy of the first model by, for example, requesting a copy of the first model from client 508 and copying the first model to a virtual machine.

At 808, control circuitry 606 may input the verification dataset into the first model. For example, control circuitry 606 may input samples from verification dataset 206 to first model 208 via the API by transmitting samples from verification dataset 206 over network 504. In response to inputting the verification dataset into the first model, control circuitry 606 may receive, at 810, predictions from the first model. For example, the predictions may comprise an indication of whether to accept or reject a loan applicant or a probability of default.

At 812, control circuitry 606 hashes the predictions from the first model. For example, control circuitry 606 may apply a cryptographic hash to the first model predictions so that an outside entity is not capable of determining the first model predictions themselves by merely observing the hashed value. In some embodiments, control circuitry 606 may generate or select a cryptographic hashing function such that the function is deterministic, irreversible, resistant to hash collisions, uniform, and computationally easy to compute. As an example, control circuitry 606 may select from among hashing algorithms such as MD-5, SHA-256, SHA-512, etc.

At 814, control circuitry 606 publishes the verification dataset in plaintext and the hashed predictions. For example, control circuitry 606 may publish verification dataset 206 in plaintext on a webpage that is accessible on the Internet, or may transmit verification dataset 206 in plaintext to a client (e.g., client 508) that is performing a test or verification. Likewise, control circuitry 606 may publish hashed first model predictions 210 on a webpage that is accessible on the Internet, or may transmit hashed first model predictions 210 in plaintext to a client (e.g., client 508) that is performing a test or verification. However, because hashed first model predictions 210 are hashed, the output from first model 208 itself will not be observable, even upon publication.

In some embodiments, control circuitry 606 receives the published verification dataset (at 822) during test time 820. Test time 820 may follow reference time 802 by a period of days, months, years, etc. At 824, control circuitry 606 receives access to a second model (e.g., second model 218). In some embodiments, control circuitry 606 accesses second model 218 via an API, whereas in other embodiments control circuitry 606 may access a copy of second model 218. At 826, control circuitry 606 inputs the verification dataset into the second model. For example, after control circuitry 606 receives the published plaintext version of verification dataset 206, control circuitry 606 may apply samples from verification dataset 206 as input to second model 218 (e.g., via the API).

At 828, in response to inputting the verification dataset into the second model at 826, control circuitry 606 may receive predictions from the second model. For example, second model 218 may output one or more predictions in response to receiving input samples. For example, control circuitry 606 may receive, over network 504 from second model 218, probabilities of whether particular loan applicants will default in the future. Upon receiving the predictions from the second model, control circuitry 606 may hash the predictions from the second model at 830. For example, control circuitry 606 may apply hashing algorithm 221, which may match hashing algorithm 211 and may comprise any of the hashing algorithms described above. In response to hashing the predictions from the second model, control circuitry 606 may generate hashed second model predictions 220.

In some embodiments, following test time 820, control circuitry 606 may verify whether the first model corresponds to the second model (e.g., at verification time 840). At 842, control circuitry 606 receives the published hashed first model predictions. For example, control circuitry 606 may receive the hashed first model predictions (e.g., hashed first model predictions 210) from a website on the Internet or by requesting it from storage circuitry 608 and/or database 506 that is associated with the hashed first model predictions. At 844, control circuitry 606 receives the hashed second model predictions. For example, control circuitry 606 may receive the hashed second model predictions (e.g., hashed second model predictions 220) from a website on the Internet or by requesting it from storage circuitry 608 and/or database 506 that is associated with the hashed second model predictions. The storage location for hashed second model predictions may differ or may be the same as the storage location for hashed first model predictions.

At 846, control circuitry 606 compares the hashed first model predictions to the hashed second model predictions. Because of the nature of the hashing algorithm selected by control circuitry 606 (e.g., hashing algorithm 211 and/or hashing algorithm 221) if the output of first model 208 differs from the output of second model 218, even slightly, this will result in changes to the hashed output value. Accordingly, control circuitry 606 may determine that first model 208 does not correspond to second model 218 (at 848) when the hashed first model predictions 210 do not match hashed second model predictions 220. In contrast, control circuitry 606 may determine that first model 208 does correspond to second model 218 (at 848) when the hashed first model predictions 210 do match hashed second model predictions 220.

It is contemplated that the steps or descriptions of FIG. 8 may be used with any other embodiment and processes of this disclosure. In addition, the descriptions described in relation to the process of FIG. 8 may be done in alternative orders or in parallel to further the purposes of this disclosure.

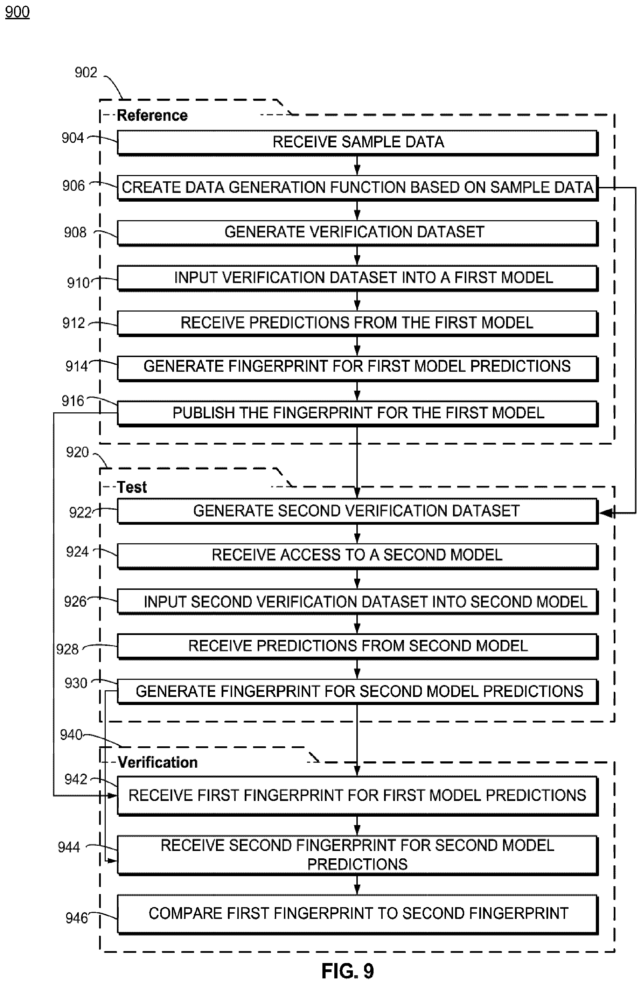

FIG. 9 shows an illustrative flowchart of a process for verifying an identity of an AI model based on model behavior, in accordance with some embodiments of the disclosure. For example, any of verification enablement systems 102, 202, and/or 302 implementing process 900 may be encoded onto a non-transitory storage medium (e.g., storage circuitry 608) as a set of instructions to be decoded and executed by processing circuitry (e.g., processing circuitry 604 of control circuitry 606). Processing circuitry may, in turn, provide instructions to other sub-circuits contained within control circuitry 606. It should be noted that process 900, or any step thereof, could be performed on, or provided by, any of the devices shown in FIGS. 5-6 and/or any of verification enablement systems 102, 202, and/or 302.

In some embodiments, process 900 may correspond to system 300 of FIG. 3, where control circuitry 606 may verify the identity of an AI model using a behavioral fingerprint of an AI model. In some embodiments, process 900 may be characterized by one or more distinct time periods in which elements of process 900 may occur, for example, one or more elements of process 900 may occur during reference time 902, where process 900 may generate output for a first AI model;

during test time 920, where process 900 may generate output for a second AI model; and during verification time 940, where process 900 may determine whether the first model corresponds to the second model. However, reference time 902, test time 920, and verification time 940 are merely intended to be illustrative and not limiting. The elements depicted in process 900 may vary in order or execution time without departing from the scope of the present disclosure. Additionally, one or more components, systems or devices may execute various portions of process 900. For example, first control circuitry 606 may execute process 900 at reference time 902 and second control circuitry 606 may execute process 900 at test time 820, either in parallel or in sequence.

At 904, control circuitry 606 (e.g., any control circuitry running or executing a verification enablement system such as verification enablement system 102, 202, and/or 302) receives sample data. For example, control circuitry 606 may receive, over a network connection from a client (e.g., client 508), a set sample data used to train, test and/or verify first model 308 (e.g., an evaluation dataset). In some embodiments, control circuitry 606 may analyze the sample data to determine a dimension and range of feature values in the samples. For example, control circuitry 606 may determine that an age range for loan application samples spans 18-100 years and the credit scores span 300-850. Accordingly, control circuitry 606 may develop a data generation function (at 906) that creates output samples that are modeled based on the determined dimension and range of feature values of samples in the evaluation dataset. In some embodiments, control circuitry 606 may identify a distribution of values within a range of feature values and may modify the data generation function based on the distribution. For example, control circuitry 606 may determine that most loan applications in the evaluation dataset from client 508 correspond to applicants whose ages are within 30-45 years old. Accordingly, control circuitry 606 may configure the data generation function (e.g., data generation function 307, which may be configured as model 400) to output more samples with ages between 30-45 than samples with ages spanning 90-100. In some embodiments, control circuitry 606 may publish the data generation function on, for example, a webpage that can be accessed by clients (e.g., client 508) over the Internet. By publishing the data generation function, other entities, such as client 508, may independently generate a unique verification dataset.

At 908, control circuitry 606 may generate a verification dataset based on the data generation function. For example, control circuitry 606 may utilize data generation function 308 to generate a set of verification data, such as verification dataset 306, as described above. At 910, control circuitry 606 may input verification dataset to the first model (e.g., first model 308)._For example, control circuitry 606 may input the samples generated by data generation function 308 (e.g., verification dataset 306) to first model 308 by, for example, accessing first model 308 via an API and applying the samples via an input function of the API. In response to inputting the verification dataset into the first model, verification enablement system 302 may receive, at 912, predictions from the first model. For example, control circuitry 606 may receive from first model 307 predictions (e.g., probabilities that a loan will default based on an application) generated based on the input verification data.

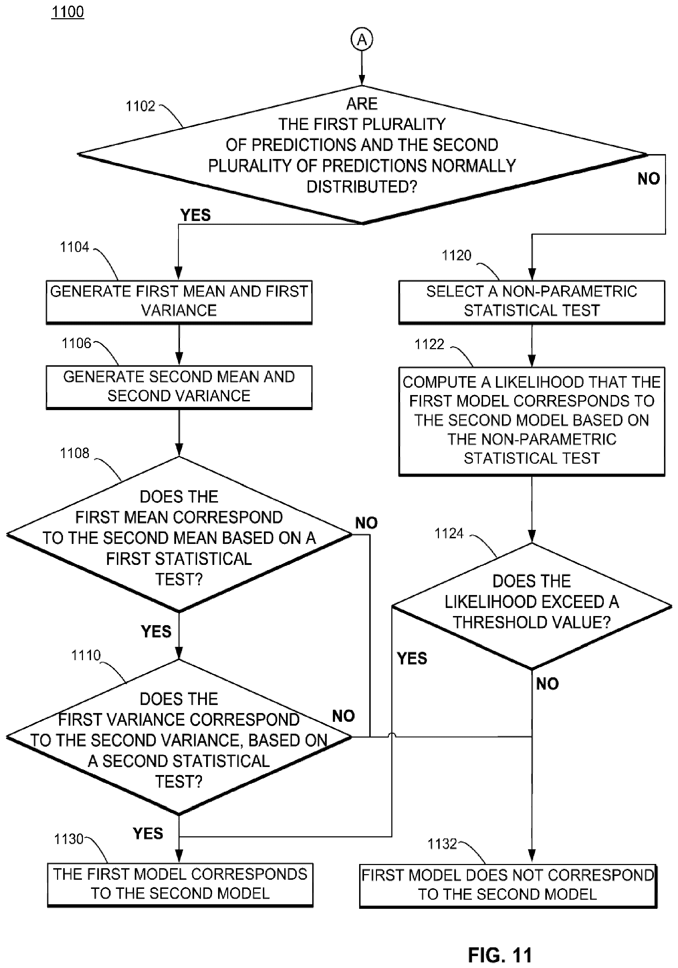

At 914, control circuitry 606 generates a behavioral fingerprint for the first model predictions. For example, control circuitry 606 may generate fingerprint 310 based on the output of first model 308. In some embodiments, the behavioral fingerprint captures summary statistics of the behavior of the output of first model 308 when an input from data generation function 307 is applied to first model 308. A method for generating a fingerprint in accordance with some embodiments of the present disclosure is described further with respect to FIG. 11 and above with respect to FIG. 3. At 916, control circuitry 606 publishes the fingerprint for the first model (e.g., fingerprint 310). In some embodiments, the fingerprint (e.g., fingerprint 310) may be stored in storage, such as storage circuitry 608, in a manner that is accessible to other users (e.g., client 508), such as on a website that provides access to storage circuitry 608.

In some embodiments, control circuitry 606 may generate a second verification dataset (at 922) during test time 920. In some embodiments, test time 920 may follow reference time 902. For example, test time 920 may be a day, a week, a month, a year, etc., after reference time 902 so that, for example, a regulatory agency can ensure that no material changes were made to an AI model of a developer over the course of the day, week, month, year, etc. At 922, control circuitry 606 generates the second verification dataset based on, for example, data generation function 307. Of note, the data generated by data generation function 307 at test time 920 may differ from that of the output from data generation function 307 at reference time 902. However, because the behavior of the two models is compared (not the output itself), the verification enablement system is able to compare the two models using the distinct input data. Furthermore, because the behavior of the two models is compared, a developer may make minor changes to the model without sacrificing the verification process.

At 924, control circuitry 606 receives access to a second model (e.g., second model 318). For example, control circuitry 606 may receive access to second model 318 via an API or by copying second model 318 to a virtual machine, as described above. At 926, control circuitry 606 applies the second verification dataset as input to second model 318. For example, control circuitry 606 may apply the data generated by data generation function 307 (e.g., generated data 313) as input to second model 318. In response to inputting the second verification dataset to the second model, at 928, control circuitry 606 may receive predictions from the second model. For example, control circuitry 606 may automatically receive the output predictions from second model 318 in response to applying the input to second model 318 via the API. In some embodiments, control circuitry 606 may generate a fingerprint for the second model predictions. In some embodiments, the fingerprint may comprise one or more summary statistics as described above with respect to FIG. 3 and below with respect to FIG. 11.

In some embodiments, following test time 920, control circuitry 606 may verify whether the first model corresponds to the second model (e.g., at verification time 940). At 942, control circuitry 606 receives the first fingerprint for the first model predictions. For example, control circuitry 606 may receive published fingerprint 310 from, for example, the Internet or by requesting fingerprint 310 from a database such as database 506. At 944, control circuitry 606 receive the second fingerprint for the second model predictions. For example, control circuitry 606 may receive fingerprint 321 of the predictions of second model 318. For example, the verification enablement system may automatically provide the second fingerprint to a client (e.g., client 508 when performing the verification) after generating the fingerprint for the second model predictions at 930. In some embodiments, the fingerprints are stored in storage, such as storage 608. The storage location for the first fingerprint may differ from or may be the same as the storage location for the second fingerprint.

At 946, control circuitry 606 compares the first behavioral fingerprint to the second behavioral fingerprint. Because the behavioral fingerprints capture the behavior of the first model and the second model when applied inputs of a similar nature (e.g., based on data generation function 307), first model 308 may differ slightly from second model 318 without failing verification so long as the behavior of the two models remains the same (e.g., the behavioral fingerprints of the two models are not statistically significantly different). For example, control circuitry 606 may apply a statistical test as described above with respect to FIG. 3 or below with respect to FIG. 11 to determine whether first model 308 corresponds to second model 318. In some embodiments, the statistical test comprises determining whether the behavioral fingerprints of the two models are not statistically significantly different. Control circuitry 606 may determine that first model 208 corresponds to second model 218 when the first fingerprint (e.g., fingerprint 310) is not statistically distinct from the second fingerprint (e.g., fingerprint 321). In contrast, control circuitry 606 may determine that first model 208 does not correspond to second model 218 when the first fingerprint (e.g., fingerprint 310) is statistically distinct from the second fingerprint (e.g., fingerprint 321).

It is contemplated that the steps or descriptions of FIG. 9 may be used with any other embodiment and processes of this disclosure. In addition, the descriptions described in relation to the process of FIG. 9 may be done in alternative orders or in parallel to further the purposes of this disclosure.

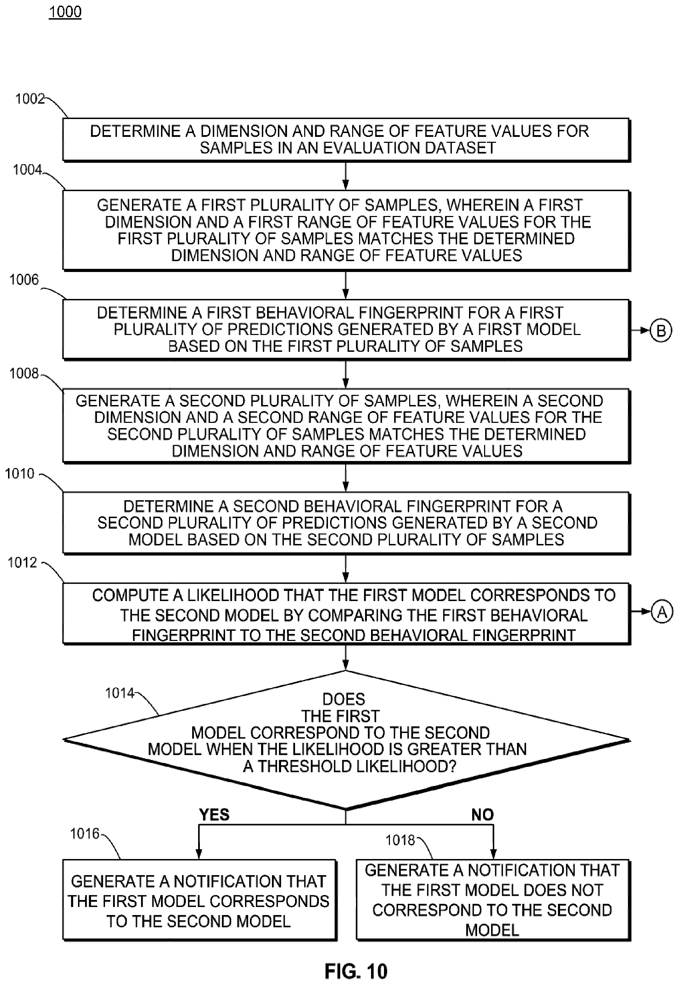

FIG. 10 shows an illustrative flowchart of a process for determining a likelihood of whether two AI models correspond to each other, in accordance with some embodiments of the disclosure. For example, any of verification enablement systems 102, 202, and/or 302 implementing process 1000 may be encoded onto a non-transitory storage medium (e.g., storage circuitry 608) as a set of instructions to be decoded and executed by processing circuitry (e.g., processing circuitry 604 of control circuitry 606). Processing circuitry may, in turn, provide instructions to other sub-circuits contained within control circuitry 606. It should be noted that process 1000, or any step thereof, could be performed on, or provided by, any of the devices shown in FIGS. 5-6 and/or any of verification enablement systems 102, 202, and/or 302.

At 1002, control circuitry 606 determines a dimension and range of feature values for samples in an evaluation dataset. For example, control circuitry 606 may receive an evaluation dataset from a client, such as client 508, that is a developer of a first model (e.g., first model 308). The evaluation dataset may be associated with banking loan applications. Each sample in the evaluation dataset may be associated with a loan application. Each loan application may be associated with a range of feature values. For example, each loan application may be associated with a first field, such as an age, which may span 18-100; a second field, such as a credit score, which may span 300-850; and a third field, employment status, which may be employed or unemployed.

At 1004, control circuitry 606 generates a first plurality of samples, wherein the first dimension and the first range of feature values for the first plurality of samples matches the determined dimension and range of feature values. For example, control circuitry 606 may create and/or train a data-generating function to generate samples that correspond to the evaluation dataset. For example, control circuitry 606 may generate an AI model (e.g., model 400) that outputs loan application samples that have an age range field with values between 18-100, a credit score field with values between 300-850 and an employment status field that is employed or unemployed. In some embodiments, the data generation function (e.g., data generation function 307) may mirror a distribution associated with the evaluation dataset (e.g., more applications are generated with an age between 30 and 40 than between 90 and 100 when the evaluation set has a similar distribution of ages).

At 1006, control circuitry 606 determines a first behavioral fingerprint for a first plurality of predictions generated by a first model based on the first plurality of samples. For example, when control circuitry 606 inputs the generated samples (e.g., verification dataset 306) into first model 308, first model 308 may output predictions of a probability that an applicant for a loan will default in the future and/or a decision on whether to accept or reject a loan applicant. In some embodiments, the behavioral fingerprint may be based on summary statistics associated with the distribution of outputs from the first model. For example, a continuous variable, such as a probability of default, may be associated with a mean and a variance of the distribution. In some embodiments, the behavioral fingerprint may be based on summary statistics across one or more features. For example, control circuitry 606 may generate a first set of summary statistics (e.g., a mean and a variance for the probability of default) for loan applicants with an age range of 18-30 and a second set of summary statistics (e.g., a mean and variance for the probability of default) for loan applicants with an age range of 31-40. In some embodiments, the behavioral fingerprint may comprise one or more summary statistics (such as one for age ranges of 18-30 and 31-40). In some embodiments, control circuitry 606 may transmit the behavioral fingerprint to a third party.

At 1008, control circuitry 606 generates a second plurality of samples, wherein the second dimension and second range of feature values for the second plurality of samples matches the determined dimension and range of feature values. For example, control circuitry 606 may receive a data generation function as described above. In some embodiments, the data generation function may be published so that any stakeholder may generate a verification dataset that matches the dimension and range of feature values for samples in the evaluation dataset provided by the developer. Furthermore, by providing a data generation function instead of the evaluation dataset itself, the developer is protected from theft or exposure of the evaluation dataset. When control circuitry 606 generates the second plurality of samples, control circuitry 606 may query, and/or copy and run, data generation function 307. Based on querying or running data generation function 307, control circuitry 606 may generate data (e.g., generated data 313) based on the data generation function.

At 1010, control circuitry 606 may determine a second behavioral fingerprint for a second plurality of predictions generated by a second model based on the second plurality of samples. For example, control circuitry 606 may generate a second plurality of predictions by inputting the second verification dataset to second model 318 and may, based on the output of second model 318, generate a second behavioral fingerprint for the output of the second model (e.g., fingerprint 321).

At 1012, control circuitry 606 may compute a likelihood that the first model corresponds to the second model by comparing the first behavioral fingerprint to the second behavioral fingerprint. For example, control circuitry 606 may compare fingerprint 310 to fingerprint 321 by determining whether fingerprint 310 is statistically different from fingerprint 321 (e.g., based on the summary statistics as described above). An illustrative example of comparing two behavioral fingerprints is described further with respect to FIG. 11.

At 1014, control circuitry 606 may determine whether the first model corresponds to the second model when the likelihood is greater than a threshold likelihood. For example, control circuitry 606 may compare the summary statistics associated with the first fingerprint (e.g., the mean and variance associated with fingerprint 310) and the summary statistics associated with the second fingerprint (e.g., the mean and variance associated with fingerprint 321). For example, control circuitry 606 may perform a statistical test to determine whether first fingerprint is statistically similar to the second fingerprint. In some embodiments, the threshold likelihood may be associated with a parameter of a statistical test, such as a confidence level. In some embodiments, each fingerprint may be associated with one or more means or variances.

At 1016, control circuitry 606 generates a notification that the first model corresponds to the second model when control circuitry 606 determines that the likelihood that the first model corresponds to the second model is greater than the threshold. For example, when control circuitry 606 determines a confidence level that the first model corresponds to the second model exceeds the confidence level (e.g., based on the summary statistics associated with the output from both models), control circuitry 606 may determine that the first model corresponds to the second model. In contrast, at 1018, control circuitry 606 may generate a notification (e.g., a notification to client 508) that the first model does not correspond to the second model when a confidence level that the first model corresponds to the second model does not exceed the threshold confidence level (e.g., based on the summary statistics associated with the output from both models).

It is contemplated that the steps or descriptions of FIG. 10 may be used with any other embodiment and processes of this disclosure. In addition, the descriptions described in relation to the process of FIG. 10 may be done in alternative orders or in parallel to further the purposes of this disclosure.

FIG. 11 shows an illustrative flowchart of a process for determining a likelihood of whether two AI models correspond to each other, in accordance with some embodiments of the disclosure. For example, any of verification enablement systems 102, 202, and/or 302 implementing process 1100 may be encoded onto a non-transitory storage medium (e.g., storage circuitry 608) as a set of instructions to be decoded and executed by processing circuitry (e.g., processing circuitry 604 of control circuitry 606). Processing circuitry may, in turn, provide instructions to other sub-circuits contained within control circuitry 606. It should be noted that process 1100, or any step thereof, could be performed on, or provided by, any of the devices shown in FIGS. 5-6 and/or any of verification enablement systems 102, 202, and/or 302. In some embodiments, process 1100 may be incorporated into process 1000, such as at 1012 of FIG. 10, where control circuitry 606 computes a likelihood that the first model corresponds to the second model by comparing the first behavioral fingerprint to the second behavioral fingerprint.

At 1102, control circuitry 606 determines whether the first plurality of predictions and the second plurality of predictions are normally distributed. For example, control circuitry 606 may analyze the outputs from one or both of first model 308 and second model 318 to determine whether the outputs from first model 308 and second model 318 are normally distributed. For example, control circuitry 606 may map each of the outputs from first model 308 and second model 318 to a graph to determine whether those outputs are approximately normally distributed. In some embodiments, control circuitry 606 may determine whether the outputs are normally distributed across one or more parameters, such as fields corresponding to the input data (e.g., verification data 306 and/or generated data 313). When control circuitry 606 determines that the first plurality of predictions and the second plurality of predictions are normally distributed, control circuitry 606 proceeds to 1104, where control circuitry 606 generates a first mean and a first variance. Otherwise, control circuitry 606 proceeds to 1120, where control circuitry 606 selects a non-parametric statistical test.

At 1104, control circuitry 606 computes a first mean and a first variance (e.g., for the output of first model 308) and, at 1106, computes a second mean and a second variance (e.g., for second model 318). For example, when the outputs of first model 308 and second model 318 are normally distributed, control circuitry 606 may compute a first mean and a first variance for the output from first model 308 and may compute a second mean and a second variance for the output from second model 318. The first mean and the first variance may be utilized (by control circuitry 606) to perform a statistical test (e.g., a t-test) to determine whether the output of the first model corresponds to the output of the second model.

At 1108, control circuitry 606 determines whether the first mean corresponds to the second mean based on a first statistical test. For example, when the means and variances for the predictions from the two models are statistically similar (e.g., there is not a statistically significant difference between the two), control circuitry 606 may determine that the two models are the same because their behavior is statistically similar. Control circuitry 606 may determine that the first model corresponds to the second model when a computed likelihood of a statistical test is greater than a threshold value. For example, when the means and variances can be reasonably assumed to parametrize a distribution that is normally distributed (e.g., as determined in 1102), control circuitry 606 may determine an acceptable threshold $\alpha_1$ for the dissimilarity of the means and an acceptable threshold $\alpha_2$ for the dissimilarity of the variances. In some embodiments, the acceptable threshold for dissimilarity or means for differences may be determined by a third party, such as a stakeholder, regulatory authority, etc. Control circuitry 606 may compute an unpaired sample t-test assuming unequal variances and unequal sample sizes to determine whether the second mean differs from the first. For example, an illustrative formula is depicted below:

$$t = \frac{\overline{X} - \overline{Y}}{s_p * \sqrt{\frac{1}{n_1} - \frac{1}{n_2}}},$$

$\overline{X}$ and $\overline{Y}$ may be the sample means of the predictions from the first and second model, respectively; $s_p$ may be the pooled standard deviation of the two sets of predictions; and $n_1$, $n_2$ may be sample sizes of the two sets of predictions. Control circuitry 606 may use this test statistic to perform a student's t-distribution for two-sided statistical tests to determine whether the acceptability threshold $\alpha_1$ is violated. If control circuitry 606 determines that it is violated (e.g., "No" at 1108), control circuitry 606 may determine that the second model is different from the first and may proceed to 1132, where control circuitry 606 determines that the first model does not correspond to the second model and notifies the appropriate parties (e.g., any of the parties performing the verification of first model 308 and second model 318).

If control circuitry 606 does not determine that the two models are distinct based on the t-test (e.g., at 1108 determines that the first mean corresponds to the second mean), control circuitry 606 proceeds to 1110, where control circuitry 606 determines whether the first variance corresponds to the second variance based on the second statistical test (e.g., a test of variances) to evaluate the equality of the variances of the predictions of the two models. At 1110, control circuitry 606 may perform a two-sided F-test. Control circuitry 606 may calculate a ratio of the variance of the predictions outputted by the first model and the variances of the predictions outputted by the second model. Control circuitry 606 may compare this ratio to the value of the F distribution with ($n_1$ - 1) and ($n_2$ - 1) degrees of freedom. If control circuitry 606 determines that the ratio is less than the distribution evaluated at the point 1 - $\alpha_2$ or greater than the value of the distribution evaluated at the point $\alpha_2$, then control circuitry 606 may "reject" the null hypothesis that the variances of the predictions output by the two models are unequal and control circuitry 606 may determine that the second model (e.g., second model 318) is different from the first (e.g., first model 308) and proceed to 1132 (e.g., the first variance does not correspond to the second variance). Otherwise, control circuitry 606 may proceed to 1130 (e.g., the first variance does correspond to the second variance).

Returning to 1102, if control circuitry 606 determines that the first plurality of predictions and the second plurality of predictions do not parameterize a normal distribution, control circuitry 606 proceeds to 1120, where control circuitry 606 selects a non-parametric statistical test to determine whether the behavior of the first model is similar to the behavior of the second model. For example, control circuitry 606 may compute an energy statistic to determine whether first model 308 corresponds to second model 318.

At 1122, control circuitry 606 may being computing the energy statistic by selecting an acceptable threshold $\beta$ for the dissimilarity of the distributions of predictions from first model 308 model and second model 318. In some embodiments, the acceptable threshold $\beta$ may be selected by a client, such as a regulatory agency, may be selected based on the nature of the input data, selected on the threshold of dissimilarity that is acceptable in a particular real-world application of first model 308 and/or second model 318. Control circuitry 606 may calculate, for example, an energy statistic using the samples of predictions generated by first model 308 and second model 318, respectively. For example, control circuitry 606 may compute the energy statistic using the formula below:

$$T \;=\; \frac{n_1 n_2}{n_1 + n_2}\, E_{n_1,n_2}(X,Y)$$

Where $E_{n1,n2}$ = 2A - B - C and A, B, C are the arithmetic means of the differences between the predictions of first model 308 and second model 318, the differences between the predictions of first model 308 and second model 318, and the differences between the predictions of second model 318 and second model 318, respectively. Control circuitry 606 may treat this energy statistic T as the alternative hypothesis and may construct a null hypothesis by performing a permutation test: verification enablement system 302 may pool the predictions from first model 308 and second model 318. Verification enablement system 302 may then re-assign each of the pooled predictions to a surrogate X or surrogate Y and calculate a T' energy statistic for the surrogate X with n1 samples and surrogate Y with n2 samples. Verification enablement system 302 may repeat this re-assignment process many times such that all possible permutations r of assignments of predictions from first model 308 and predictions from second model 318 are assigned to new surrogates X and Y with $n_1$ and $n_2$ samples, respectively. Verification enablement system 302 may compute the proportion of permutations $\frac{k}{r}$ in which the surrogate-derived energy statistic T' >= T the observed energy statistic. If the proportion $\frac{k}{r} > \beta$, verification enablement system 302 may "reject" the null hypothesis that the distributions of predictions from first model 308 and second model 318 are identical. In such a case, verification enablement system 302 may determine that second model 318 is different from first model 308 and proceed to 1132 (e.g., the likelihood does not exceed the threshold value). When verification enablement system 302 does not reject the null hypothesis, verification enablement system 302 may determine at 330 that first model 308 corresponds to second model and proceeds to 1130 (e.g., the likelihood does exceed the threshold value).

At 1124, control circuitry 606 may compare the behavior of the output of first model 308 to that of second model 318 (e.g., determine whether the likelihood exceeds a threshold value) to determine whether the behavior of the two models is similar. Because a threshold of dissimilarity in the outputs is both expected and permitted, control circuitry 606 enables verification of two AI models that may be developed or changed over time without failing a verification. Furthermore, the systems and methods provided herein allow for a client (e.g., a regulatory agency) to select a threshold level of dissimilarity that is applicable for a particular situation. For example, a threshold level of dissimilarity for a loan processing AI model may be different from that of an AI model used in a safety system on a vehicle. In some embodiments, at 1130 and/or 1132, control circuitry 606 may provide a notification to a client, developer, or other stakeholder to indicate the results of the verification (e.g., whether the first model corresponds to the second model). It is contemplated that the steps or descriptions of FIG. 11 may be used with any other embodiment and processes of this disclosure. In addition, the descriptions described in relation to the process of FIG. 11 may be done in alternative orders or in parallel to further the purposes of this disclosure.

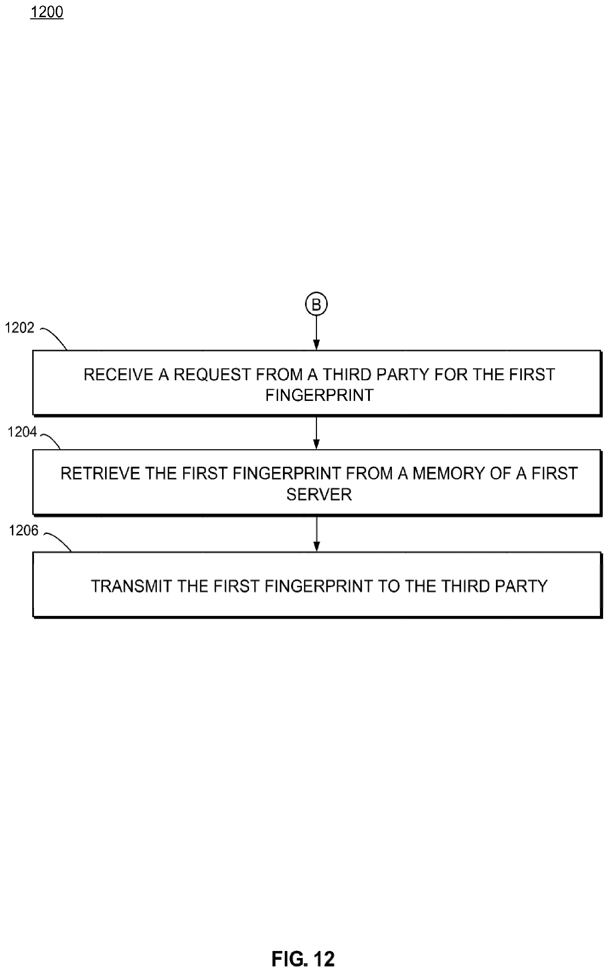

FIG. 12 shows an illustrative flowchart of a process for sharing data with a third party, in accordance with some embodiments of the disclosure. For example, any of verification enablement systems 102, 202, and/or 302 implementing process 1200 may be encoded onto a non-transitory storage medium (e.g., storage circuitry 608) as a set of instructions to be decoded and executed by processing circuitry (e.g., processing circuitry 604 of control circuitry 606). Processing circuitry may, in turn, provide instructions to other sub-circuits contained within control circuitry 606. It should be noted that process 1200, or any step thereof, could be performed on, or provided by, any of the devices shown in FIGS. 5-6 and/or any of verification enablement systems 102, 202, and/or 302. In some embodiments, process 1200 may be incorporated into process 1000, such as at 1006 of FIG. 10, where control circuitry 606 determines a first behavioral fingerprint for a first plurality of predictions generated by a first model based on the first plurality of samples.

In some embodiments, control circuitry 606 may be located on a first device that performs an evaluation of an AI model (e.g., first model 308) at a reference time (e.g., reference time 304), and a second control circuitry 606 located on a second device may perform an evaluation of a second AI model (e.g., second model 318) at a test time (e.g., test time 316). In such instances, control circuitry 606 may need to share the results of a first evaluation of the first model with a third party. At 1202, control circuitry 606 receives a request from a third party for the first fingerprint. For example, control circuitry 606 may receive, over network 504, a request from client 508 for the fingerprint. In some embodiments, control circuitry 606 may verify the identity of the client 508 by first requesting authentication information from client 508 prior to responding to the request (e.g., a password, access code, login credentials, etc.). In some embodiments, the fingerprint may be stored by control circuitry 606 and made available via a website accessible by the public on the Internet. In such instances, the request for the first fingerprint may be formatted as an HTTP request.

At 1204, control circuitry 606 receives the first fingerprint from a memory of a first server. For example, control circuitry 606 may store the first fingerprint (e.g., fingerprint 310) on storage circuitry, such as storage circuitry 608. In some embodiments, storage circuitry 608 is located on a server, such as server 502 and/or database 506. Control circuitry 606 may facilitate the transfer of the first fingerprint from storage circuitry 608, server 502, and/or database 506 by, for example, transmitting a request to any of such systems, receiving the first fingerprint, and formatting the data of the first fingerprint in a manner or format to transmit to a client (e.g., encrypted for transmission over a secure channel). At 1206, control circuitry 606 transmits the first fingerprint to the third party. For example, control circuitry 606 may transmit the first fingerprint over network 504 to client 508. In some embodiments, upon receiving a copy of the first fingerprint, control circuitry 606 of client 508 may perform a verification of the first model by comparing the behavioral fingerprint of the first model to that of a second model.

It is contemplated that the steps or descriptions of FIG. 12 may be used with any other embodiment and processes of this disclosure. In addition, the descriptions described in relation to the process of FIG. 12 may be done in alternative orders or in parallel to further the purposes of this disclosure.

The processes discussed above are intended to be illustrative and not limiting. Any portion of the processes discussed herein may be omitted, modified, combined and/or rearranged, and any additional steps may be performed without departing from the scope of the invention. More generally, the above disclosure is meant to be exemplary and not limiting. Only the claims that follow are meant to set bounds as to what the present invention includes. Furthermore, it should be noted that the features and limitations described in any one embodiment may be applied to any other embodiment herein, and sequence diagrams, flowcharts or examples relating to one embodiment may be combined with any other embodiment in a suitable manner, done in different orders, or done in parallel. In addition, the systems and methods described herein may be performed in real time. It should also be noted that the systems and/or methods described above may be applied to, or used in accordance with, other systems and/or methods.

## Claims

1. A method for verifying the identity of artificial intelligence models comprising:

   determining a dimension and a range of feature values for samples in an evaluation dataset;
   generating a first plurality of samples, wherein a first dimension and a first range of feature values for the first plurality of samples matches the determined dimension and range of feature values;
   determining a first behavioral fingerprint for a first plurality of predictions generated by a first model based on the first plurality of samples;
   generating a second plurality of samples, wherein a second dimension and a second range of feature values for the second plurality of samples matches the determined dimension and range of feature values;
   determining a second behavioral fingerprint for a second plurality of predictions generated by a second model based on the second plurality of samples;
   computing a likelihood that the first model corresponds to the second model by comparing the first behavioral fingerprint to the second behavioral fingerprint; and
   determining that the first model corresponds to the second model when the likelihood is greater than a threshold value.

2. The method of claim 1, wherein computing the likelihood that the first model corresponds to the second model by comparing the first behavioral fingerprint to the second behavioral fingerprint comprises:

   determining that the first plurality of predictions and the second plurality of predictions correspond to a normal distribution;
   in response to the determining, generating a first mean and a first variance for the first plurality of predictions and a second mean and a second variance for the second plurality of predictions;
   comparing the first mean to the second mean based on a statistical test;
   determining that the first mean corresponds to the second mean when a result of the statistical test is within an acceptability threshold; and
   determining that the first mean does not correspond to the second mean when the result of the statistical test is not within the acceptability threshold.

3. The method of claim 2, wherein the statistical test is a first statistical test, and further comprising, in response to determining that the first mean corresponds to the second mean:

   determining whether the first variance corresponds to the second variance based on a second statistical test;
   computing a high likelihood that the first model corresponds to the second model when the first variance corresponds to the second variance and the first mean corresponds to the second mean; and
   computing a low likelihood that the first model corresponds to the second model when the first variance does not correspond to the second variance and the first mean does not correspond to the second mean.

4. The method of claim 1, wherein computing the likelihood that the first model corresponds to the second model by comparing the first behavioral fingerprint to the second behavioral fingerprint comprises:

   determining that the first plurality of predictions and the second plurality of predictions do not correspond to a normal distribution;
   in response to the determining, selecting a non-parametric statistical test;
   comparing the first plurality of samples to the second plurality of samples based on the selected non-parametric statistical test; and
   in response to the comparison, computing the likelihood that the first model corresponds to the second model.

5. The method of claim 1, wherein generating the second plurality of samples comprises:

   formulating a data generation function based on the determined dimension and range of feature values for the samples in the evaluation dataset;
   storing the data generation function in a memory; and
   generating, subsequent to storing the data generation function in the memory, the second plurality of samples from the data generation function; and preferably
   wherein the memory is a first memory of a first server, and wherein the first model is stored in a second memory of a second server.

6. The method of claim 1, further comprising:

   in response to determining that the first model corresponds to the second model, causing to be output a notification indicating that a first behavioral fingerprint of the first model and a second behavioral fingerprint of the second model is statistically similar;
   determining that the first model does not correspond to the second model when the likelihood is not greater than the threshold value; and
   in response to determining that the first model does not correspond to the second model, causing to be output a notification indicating that a first behavioral fingerprint of the first model and a second behavioral fingerprint of the second model is not statistically similar.

7. The method of claim 1, wherein generating the first plurality of predictions comprises:

   transmitting the first plurality of samples, over a network connection, to the first model via an application programming interface (API); and
   in response to transmitting the samples, receiving, over the network connection via the API, the first plurality of predictions.

8. The method of claim 1, wherein the first model is a reference model and wherein the second model is a test model; and/or wherein
   the first behavioral fingerprint approximates a first behavior of the first model across a diverse plurality of samples, and wherein the second behavioral fingerprint approximates a second behavior of the second model across the diverse plurality of samples.

9. A system for verifying the identity of artificial intelligence models comprising control circuitry configured to:

   determine a dimension and a range of feature values for samples in an evaluation dataset;
   generate a first plurality of samples, wherein a first dimension and a first range of feature values for the first plurality of samples matches the determined dimension and range of feature values;
   determine a first behavioral fingerprint for a first plurality of predictions generated by a first model based on the first plurality of samples;
   generate a second plurality of samples, wherein a second dimension and a second range of feature values for the second plurality of samples matches the determined dimension and range of feature values;
   determine a second behavioral fingerprint for a second plurality of predictions generated by a second model based on the second plurality of samples;
   compute a likelihood that the first model corresponds to the second model by comparing the first behavioral fingerprint to the second behavioral fingerprint; and

determine that the first model corresponds to the second model when the likelihood is greater than a threshold value.

10. The system of claim 9, wherein the control circuitry is further configured, when computing the likelihood that the first model corresponds to the second model by comparing the first behavioral fingerprint to the second behavioral fingerprint, to:

determine that the first plurality of predictions and the second plurality of predictions correspond to a normal distribution;
in response to the determining, generate a first mean and a first variance for the first plurality of predictions and a second mean and a second variance for the second plurality of predictions;
compare the first mean to the second mean based on a statistical test;
determine that the first mean corresponds to the second mean when a result of the statistical test is within an acceptability threshold; and
determine that the first mean does not correspond to the second mean when the result of the statistical test is not within the acceptability threshold.

11. The system of claim 10, wherein the statistical test is a first statistical test, and wherein the control circuitry is further configured, in response to determining that the first mean corresponds to the second mean, to:

determine whether the first variance corresponds to the second variance based on a second statistical test;
compute a high likelihood that the first model corresponds to the second model when the first variance corresponds to the second variance and the first mean corresponds to the second mean; and
compute a low likelihood that the first model corresponds to the second model when the first variance does not correspond to the second variance and the first mean does not correspond to the second mean.

12. The system of claim 9, wherein the control circuitry is further configured, when computing the likelihood that the first model corresponds to the second model by comparing the first behavioral fingerprint to the second behavioral fingerprint, to:

determine that the first plurality of predictions and the second plurality of predictions do not correspond to a normal distribution;
in response to the determining, select a non-parametric statistical test;
compare the first plurality of samples to the second plurality of samples based on the selected non-parametric statistical test; and
in response to the comparison, compute the likelihood that the first model corresponds to the second model.

13. The system of claim 9, further comprising storage circuitry, and wherein the control circuitry is further configured, when generating the second plurality of samples, to:

formulate a data generation function based on the determined dimension and range of feature values for the samples in the evaluation dataset;
store the data generation function in the storage circuitry; and
generate, subsequent to storing the data generation function in the storage circuitry, the second plurality of samples from the data generation function; and preferably
wherein the storage circuitry is a first storage circuitry of a first server, and wherein the first model is stored in a second storage circuitry of a second server.

14. The system of claim 9, wherein the control circuitry is further configured to:

in response to determining that the first model corresponds to the second model, cause to be output a notification indicating that a first behavioral fingerprint of the first model and a second behavioral fingerprint of the second model is statistically similar;
determine that the first model does not correspond to the second model when the likelihood is not greater than the threshold value; and
in response to determining that the first model does not correspond to the second model, cause to be output a notification indicating that a first behavioral fingerprint of the first model and a second behavioral fingerprint of the second model is not statistically similar.

15. The system of claim 9, wherein the control circuitry is further configured, when generating the first plurality of predictions to:

transmit the first plurality of samples, over a network connection, to the first model via an application programming interface (API); and

in response to transmitting the samples, receive, over the network connection via the API, the first plurality of predictions; and/or wherein

the first model is a reference model and wherein the second model is a test model; and/or wherein

the first behavioral fingerprint approximates a first behavior of the first model across a diverse plurality of samples, and wherein the second behavioral fingerprint approximates a second behavior of the second model across the diverse plurality of samples.

**FIG. 1**

**FIG.2**

**FIG. 3**

**FIG. 4**

500

502 504 508

506

**FIG. 5**

**600**

610 I/O

612 Display

616 Network

602
606
604 **Processing Circuitry**

CPU

GPU

ASIC

FPGA

614 Communications Circuitry

608 **Storage Circuitry**

UI

OS

Data

AI Model

**FIG. 6**

700

**Reference**

704 — GENERATE A VERIFICATION DATASET

706 — RECEIVE DIRECT ACCESS TO A FIRST MODEL

708 — APPLY VERIFICATION DATASET TO THE FIRST MODEL

710 — RECEIVE PREDICTIONS FOR THE FIRST MODEL

712 — STORE THE PREDICTIONS FROM FIRST MODEL IN MEMORY

720

**Test**

722 — RETRIEVE THE VERIFICATION DATASET

724 — RECEIVE ACCESS TO AN API FOR A SECOND MODEL

726 — APPLY VERIFICATION DATASET TO THE SECOND MODEL VIA API

728 — RECEIVE PREDICTIONS FOR THE SECOND MODEL

740

**Verification**

742 — RECEIVE THE PREDICTIONS FROM THE FIRST MODEL

744 — RECEIVE THE PREDICTIONS FROM THE SECOND MODEL

746 — COMPARE THE PREDICTIONS FROM THE FIRST MODEL TO THE PREDICTIONS FROM THE SECOND MODEL

**FIG. 7**

800

**802**

**Reference**

804 — RECEIVE A VERIFICATION DATASET

806 — RECEIVE ACCESS TO A FIRST MODEL

808 — INPUT THE VERIFICATION DATASET INTO THE FIRST MODEL

810 — RECEIVE PREDICTIONS FROM THE FIRST MODEL

812 — HASH THE PREDICTIONS FROM THE FIRST MODEL

814 — PUBLISH VERIFICATION DATASET IN PLAINTEXT AND THE HASHED PREDICTIONS

820

**Test**

822 — RECEIVE THE PUBLISHED VERIFICATION DATASET

824 — RECEIVE ACCESS TO A SECOND MODEL

826 — INPUT THE VERIFICATION DATASET INTO THE SECOND MODEL

828 — RECEIVE PREDICTIONS FROM THE SECOND MODEL

830 — HASH THE PREDICTIONS FROM THE SECOND MODEL

840

**Verification**

842 — RECEIVE THE PUBLISHED HASHED FIRST MODEL PREDICTIONS

844 — RECEIVE THE HASHED SECOND MODEL PREDICTIONS

846 — COMPARE THE HASHED FIRST MODEL PREDICTIONS TO THE HASHED SECOND MODEL PREDICTIONS

848 — DETERMINE WHETHER THE FIRST MODEL CORRESPONDS TO THE SECOND MODEL

**FIG. 8**

900

902 — Reference

904 — RECEIVE SAMPLE DATA

906 — CREATE DATA GENERATION FUNCTION BASED ON SAMPLE DATA

908 — GENERATE VERIFICATION DATASET

910 — INPUT VERIFICATION DATASET INTO A FIRST MODEL

912 — RECEIVE PREDICTIONS FROM THE FIRST MODEL

914 — GENERATE FINGERPRINT FOR FIRST MODEL PREDICTIONS

916 — PUBLISH THE FINGERPRINT FOR THE FIRST MODEL

920 — Test

922 — GENERATE SECOND VERIFICATION DATASET

924 — RECEIVE ACCESS TO A SECOND MODEL

926 — INPUT SECOND VERIFICATION DATASET INTO SECOND MODEL

928 — RECEIVE PREDICTIONS FROM SECOND MODEL

930 — GENERATE FINGERPRINT FOR SECOND MODEL PREDICTIONS

940 — Verification

942 — RECEIVE FIRST FINGERPRINT FOR FIRST MODEL PREDICTIONS

944 — RECEIVE SECOND FINGERPRINT FOR SECOND MODEL PREDICTIONS

946 — COMPARE FIRST FINGERPRINT TO SECOND FINGERPRINT

**FIG. 9**

1000

**FIG. 10**

1100

A

1102 — ARE
THE FIRST PLURALITY
OF PREDICTIONS AND THE SECOND
PLURALITY OF PREDICTIONS NORMALLY
DISTRIBUTED?

NO

YES

1104 — GENERATE FIRST MEAN AND FIRST VARIANCE

1120 — SELECT A NON-PARAMETRIC STATISTICAL TEST

1106 — GENERATE SECOND MEAN AND SECOND VARIANCE

1122 — COMPUTE A LIKELIHOOD THAT THE FIRST MODEL CORRESPONDS TO THE SECOND MODEL BASED ON THE NON-PARAMETRIC STATISTICAL TEST

1108 — DOES THE FIRST MEAN CORRESPOND TO THE SECOND MEAN BASED ON A FIRST STATISTICAL TEST?

NO

1124 — DOES THE LIKELIHOOD EXCEED A THRESHOLD VALUE?

YES

1110 — DOES THE FIRST VARIANCE CORRESPOND TO THE SECOND VARIANCE, BASED ON A SECOND STATISTICAL TEST?

NO

YES

NO

1130 — THE FIRST MODEL CORRESPONDS TO THE SECOND MODEL

1132 — FIRST MODEL DOES NOT CORRESPOND TO THE SECOND MODEL

FIG. 11

1200

(B)

1202

RECEIVE A REQUEST FROM A THIRD PARTY FOR THE FIRST
FINGERPRINT

1204

RETRIEVE THE FIRST FINGERPRINT FROM A MEMORY OF A FIRST
SERVER

1206

TRANSMIT THE FIRST FINGERPRINT TO THE THIRD PARTY

**FIG. 12**

Europäisches Patentamt
European Patent Office
Office européen des brevets

# EUROPEAN SEARCH REPORT

Application Number

EP 24 20 6284

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | LAIA AMORS ET AL: "Gimme That Model!: A Trusted ML Model Trading Protocol", ARXIV.ORG, CORNELL UNIVERSITY LIBRARY, 201 OLIN LIBRARY CORNELL UNIVERSITY ITHACA, NY 14853, 2 March 2020 (2020-03-02), XP081612079, * figure 1 * * section 3.1 * | 1-15 | INV. G06N20/10 G06N20/20 G06N5/01 G06N7/01 G06N3/08 |
| A | CHEN JIALUO ET AL: "DeepJudge: A Testing Framework for Copyright Protection of Deep Learning Models", PROCEEDINGS OF THE 2001 INTERNATIONAL ACM SIGGROUP CONFERENCE ON SUPPORTING GROUP WORK, ACM, NEW YORK, NY, US, 14 May 2023 (2023-05-14), pages 64-67, XP059147912, DOI: 10.1109/ICSE-COMPANION58688.2023.00026 ISBN: 978-1-58113-294-6 * the whole document * | 1-15 | |
| | | | TECHNICAL FIELDS SEARCHED (IPC) |
| A | BITA DARVISH ROUHANI ET AL: "Deepsigns: An end-to-end watermarking framework for ownership protection of deep neural networks", ASPLOS '19: PROCEEDINGS OF THE TWENTY-FOURTH INTERNATIONAL CONFERENCE ON ARCHITECTURAL SUPPORT FOR PROGRAMMING LANGUAGES AND OPERATING SYSTEMS, ACM, 2 PENN PLAZA, SUITE 701NEW YORKNY10121-0701USA, 4 April 2019 (2019-04-04), pages 485-497, XP058433475, DOI: 10.1145/3297858.3304051 ISBN: 978-1-4503-6240-5 * the whole document * | 1-15 | G06N |

The present search report has been drawn up for all claims

| Place of search | Date of completion of the search | Examiner |
|---|---|---|
| The Hague | 13 February 2025 | Aoun, Marc |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

............................................................

& : member of the same patent family, corresponding document

EPO FORM 1503 03.82 (P04C01)